(19) Europäisches Patentamt
European Patent Office
Office européen des brevets

(11) EP 4 401 011 A1

(12) # EUROPEAN PATENT APPLICATION
published in accordance with Art. 153(4) EPC

(43) Date of publication:
**17.07.2024 Bulletin 2024/29**

(21) Application number: **22895217.2**

(22) Date of filing: **14.09.2022**

(51) International Patent Classification (IPC):
***G06N 10/00*** *(2022.01)* ***G06F 7/38*** *(2006.01)*

(52) Cooperative Patent Classification (CPC):
**G06F 7/38; G06N 10/00**

(86) International application number:
**PCT/JP2022/034322**

(87) International publication number:
**WO 2023/089930 (25.05.2023 Gazette 2023/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.11.2021 JP 2021189039**

(71) Applicants:
- **Quemix Inc.**
**Tokyo 1030027 (JP)**
- **Tokyo Institute of Technology**
**Tokyo 152-8550 (JP)**

(72) Inventors:
- **NISHI, Hirofumi**
**Tokyo 103-0027 (JP)**
- **KOSUGI, Taichi**
**Tokyo 103-0027 (JP)**
- **NISHIYA, Yusuke**
**Tokyo 103-0027 (JP)**
- **MATSUSHITA, Yuichiro**
**Tokyo 152-8550 (JP)**

(74) Representative: **Isarpatent**
**Patent- und Rechtsanwälte**
**Barth Hassa Peckmann & Partner mbB**
**Friedrichstraße 31**
**80801 München (DE)**

(54) **INFORMATION PROCESSING METHOD, QUANTUM CIRCUIT GENERATION DEVICE, AND PROGRAM**

(57) [Problem] To provide an information processing method which further minimizes quantum bit exponential measurement frequency. [Solution] One aspect of the present invention provides an information processing method. The information processing method is provided with the following steps. A conversion step converts an operator for n number of quantum bits into a unitary gate by using fewer than (n/2) ancillary bits. The format of the unitary gate makes it possible to directly apply the operator. A circuit generation step involves generating a quantum circuit which functions as a time evolution operator when an ancillary bit is observed as a prescribed state, on the basis of the unitary gate.

FIG. 3

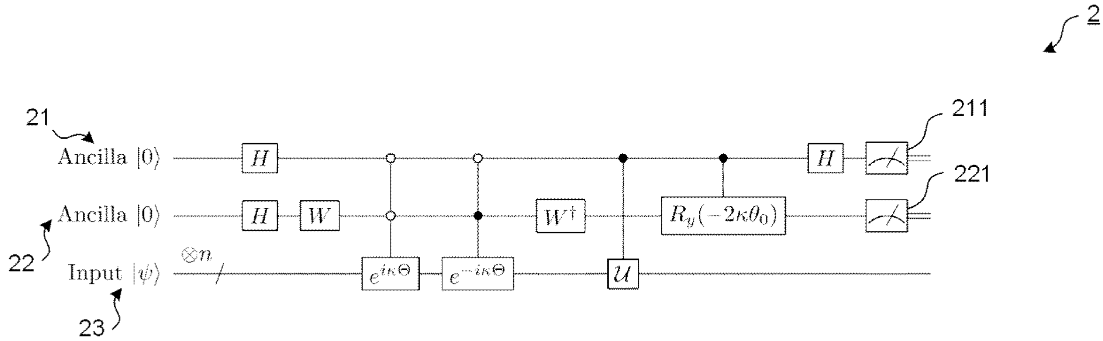


EP 4 401 011 A1

## Description

## BACKGROUND

The present invention relates to an information processing method, a quantum circuit generation apparatus, and a program.

RELATED ART

Quantum information processing using quantum mechanics for information processing has been proposed. Furthermore, many studies have been conducted on quantum computers based on such quantum information processing.
Patent Document 1 discloses a conventional technique for quantum information processing.

PRIOR ART DOCUMENTS

Patent Document

[Patent Document 1] JP 2015-135377 A

## SUMMARY

Problems to be Solved by Invention

However, according to conventional quantum information processing, when obtaining a minimum eigenvalue of an operator and a quantum state of an eigenvector thereof, an enormous number of measurements (exponential measurement frequency of qubits) of about 2^N times need to be repeated.
In view of the above circumstances, the present invention aims to provide an information processing method, etc. that further suppresses exponential measurement frequency of qubits.

Means for Solving Problems

According to an aspect of the present invention, an information processing method is provided. The information processing method comprises each step including: a conversion step of converting an operator for N qubits into a unitary gate using less than (n/2) ancillary bits, the unitary gate having a form that can implement the operator directly; and a circuit generation step of generating, based on the unitary gate, a quantum circuit that functions as a time evolution operator when the ancillary bit is observed as a predetermined state.
Such an aspect enables further suppression of the exponential measurement frequency of the qubits.

## BRIEF DESCRIPTION OF DRAWINGS

FIG. 1 is a block diagram showing a hardware configuration of a quantum circuit generation apparatus 1.
FIG. 2 is a block diagram showing a function realized by a controller 13 or the like in a quantum circuit generation apparatus 1 according to a first embodiment.
FIG. 3 is a quantum circuit implementing a time evolution operator exp(L$\Delta$t) with a general operator L as a generator.
FIG. 4 is a quantum circuit implementing an imaginary-time evolution operator exp(-H$\Delta\tau$) with a general Hermitian operator H as a generator.
FIG. 5 is a quantum circuit equivalent to the quantum circuit in FIG. 4 within a first order of $\Delta\tau$.
FIG. 6 is a flowchart showing a procedure for executing a time evolution operator exp(L$\Delta$t) with a general operator L as a generator.
FIG. 7 is a flowchart showing a procedure for obtaining a solution to a self-consistent equation using an imaginary-time evolution method.
FIG. 8 shows a correct ground state and an initial state of an imaginary-time evolution computation in an example.
FIG. 9 shows a correct ground state as well as a success state and a failure state of an imaginary-time evolution computation in an example.
FIG. 10 shows an example of a quantum circuit equivalent to the quantum circuit shown in FIG. 5.
FIG. 11 shows an example of a quantum circuit implementing an amplitude amplification operator Q in an exact imaginary-time evolution method.

FIG. 12 shows an example of a quantum circuit implementing an exact pre-amplitude amplification operator corresponding to an imaginary-time evolution operator exp(-HΔτ).

FIG. 13 shows an example of a quantum circuit implementing a pre-amplitude amplification operator Q~ corresponding to an equivalent imaginary-time evolution operator exp(-HΔτ) within a first order of Δτ.

FIG. 14 shows an example of a quantum circuit when applying a quantum amplitude amplification method based on a pre-amplitude amplification operator for an imaginary-time evolution method.

FIG. 15 shows an example of a quantum circuit C_{two} implementing two consecutive imaginary-time evolution operators exp(-HΔτ).

FIG. 16 shows an overview of a quantum circuit implementing a reference circuit U_ref in the previous step.

FIG. 17 shows an example of a quantum circuit implementing a pre-amplitude amplification operator Q~_{N_r} in N_τ step.

FIG. 18 shows an example of a quantum circuit implementing D_two^(1).

FIG. 19 is a flowchart showing an example of information processing flow when an imaginary-time evolution method and a quantum amplitude amplification method are used together.

FIG. 20 shows number of CX gates required in a quantum circuit for an amplitude amplification operator Q and number of CX gates required in a quantum circuit for a pre-amplitude amplification operator Q~, depending on change in number of qubits N.

FIG. 21 shows a simulation result of a success probability at each imaginary-time step in an example.

FIG. 22 shows a simulation result of a total success probability in an example.

FIG. 23 shows a simulation result of fidelity at each imaginary-time step in an example.

FIG. 24 shows an example of a quantum circuit QC1 for calculating a linear combination of two unitary operators U0 and U1 for an N qubit system.

FIG. 25 shows an example of a quantum circuit QCn that generalizes a quantum circuit QC1 for a linear combination of unitary operators.

FIG. 26 shows an example of a quantum circuit QCτ2 for an equivalent imaginary-time evolution operator within a second order of τ.

FIG. 27 shows an example of a quantum circuit QCA1 when equivalent imaginary-time evolution computation and quantum amplitude amplification are used together within a higher order of τ.

FIG. 28 is a flowchart for equivalent imaginary-time evolution computation within a higher order of τ.

FIG. 29 shows a simulation result of fidelity of equivalent imaginary-time evolution computation within a higher order of τ in an example.

## DETAILED DESCRIPTION

[Embodiment]

Hereinafter, embodiment of the present invention will be described with reference to the drawings. Various features described in the embodiment below may be combined with each other.

A program for realizing software in the present embodiment may be provided as a non-transitory computer-readable medium, may be provided for download from an external server, or may be provided in such a manner that the program is allowed to activate on an external computer to realize a function thereof on a client terminal (so-called cloud computing).

Further, "unit" in the present embodiment may include, for instance, a combination of hardware resources implemented by a circuit in a broad sense and software information processing that may be concretely realized by these hardware resources. Further, various information may be applied in the present embodiment, and the information may be represented by, for instance, a physical value of a signal value representing voltage or current, high or low signal value as a set of binary bits configuring of 0 or 1, or quantum superposition (so-called qubit), and communication or operationg may be executed on a circuit in a broad sense.

Furthermore, in a broad sense, the circuit may be realized by at least appropriately combining a circuit, a circuitry, a processor, a memory, or the like. In other words, the circuit may include an application-specific integrated circuit (ASIC), a programmable logic device (e.g., a simple programmable logic device (SPLD), a complex programmable logic device (CPLD), a field programmable gate array (FPGA)), or the like.

1. Hardware configuration

This section will illustrate a hardware configuration according to the present embodiment. Hereinafter, a hardware configuration of a quantum circuit generation apparatus 1 will be described as an example of a classical computer.

Note that this is merely an example, and the quantum circuit generation apparatus 1 may be implemented as a configuration of a quantum computer including a quantum memory, a quantum processor, etc.

FIG. 1 is a block diagram showing the hardware configuration of the quantum circuit generation apparatus 1. The quantum circuit generation apparatus 1 comprises a communication unit 11, a storage unit 12, a controller 13, a display unit 14, and an input unit 15, and these components are electrically connected inside the quantum circuit generation apparatus 1 via a communication bus 10. Each component will be further described below.

Although the communication unit 11 is preferably a wired type communication means such as USB, IEEE1394, Thunderbolt (registered trademark), wired LAN network communication, etc., wireless LAN network communication, mobile communication such as 3G/LTE/5G, Bluetooth (registered trademark) communication, etc. may be included as necessary. That is, it is more preferable to implement as a set of these two or more communication means. In other words, the quantum circuit generation apparatus 1 may communicate various information from the outside through the communication unit 11 and network.

The storage unit 12 is configured to store various information as defined by the above description. This may be implemented, for instance, as a storage device such as a solid state drive (SSD) that stores various programs related to the quantum circuit generation apparatus 1 executed by the controller 13, or as a memory such as a random access memory (RAM) that stores temporarily necessary information (argument, sequence, etc.) for program operation. Moreover, the storage unit 12 may store various programs, variables, etc. related to the quantum circuit generation apparatus 1 executed by the controller 13.

The controller 13 performs processing and control of overall operation related to the quantum circuit generation apparatus 1. The controller 13 is, for example, an unshown central processing unit (CPU). The controller 13 is configured to realize various functions related to the quantum circuit generation apparatus 1 by reading a predetermined program stored in the storage unit 12. In other words, information processing by software stored in the storage unit 12 is specifically realized by the controller 13 that is an example of hardware, thereby to be executed as each function unit included in the controller 13. These will be further described in the next section. The controller 13 is not limited to being a single unit, but may be implemented in such a manner that each function has two or more controller 13. Furthermore, a combination thereof may be applied as well.

The display unit 14 may be included in a housing of the quantum circuit generation apparatus 1 or may be externally attached, for example. The display unit 14 is configured to display a screen of graphical user interface (GUI) operated by a user. For instance, the display unit 14 is preferable to be implemented by using different display devices such as a CRT display, a liquid crystal display, an organic EL display, and a plasma display according to purpose of use.

The input unit 15 may be included in a housing of the quantum circuit generation apparatus 1 or may be externally attached. For example, the input unit 15 may be implemented as a touch panel integrated with the display unit 14. With the touch panel, a user may input through tapping, swiping, or other operation. Of course, a switch button, a mouse, a QWERTY keyboard, etc. may be employed instead of the touch panel. In other words, the input unit 15 receives operation input performed by the user. This input, treated as a command signal, is transferred to the controller 13 via the communication bus 10, and the controller 13 may execute predetermined control or operation as necessary.

2. Functional configuration

This section describes a functional configuration of the present embodiment. As mentioned above, information processing by software stored in the storage unit 12 is specifically realized by the controller 13, which is an example of hardware, thereby to be executed as each function unit included in the controller 13.

FIG. 2 is a block diagram showing a function realized by the controller 13, etc. in the quantum circuit generation apparatus 1 according to a first embodiment. Specifically, the quantum circuit generation apparatus 1 comprises a reception unit 131, an output unit 132, a conversion unit 133, a circuit generation unit 134, and a calculation unit 135.

The reception unit 131 is configured to receive various information from outside via the communication unit 11. For example, the various information received by the reception unit 131 may be stored in the storage unit 12 and read out to a working memory in the storage unit 12 as necessary.

The output unit 132 is configured to output various information such as an operation result in the quantum circuit generation apparatus 1. The information to be output corresponds to, for instance, output to be displayed on the display unit 14 as a screen or an image.

The conversion unit 133 is configured to execute various conversions in quantum information processing. Specifically, for instance, in a conversion step, the conversion unit 133 converts an operator for N qubits into a unitary gate using less than (n/2) ancillary bits. The unitary gate has a form that can implement the operator directly. This will be illustrated in more detail later.

The circuit generation unit 134 is configured to generate a quantum circuit as desired by a user. For instance, such a quantum circuit may be a quantum circuit that functions as a time evolution operator. More specifically, for example, the circuit generation unit 134 is configured to generate, in a circuit generation step, a quantum circuit that functions as a time evolution operator when the ancillary bits are observed as a predetermined state based on the unitary gate. This will be described in further detail later.

The calculation unit 135 is configured to execute various operation. Specifically, for example, the calculation unit 135 may execute quantum computation using a quantum circuit in a calculation step.

3. Prerequisite knowledge

This section outlines a background of quantum mechanics before illustrating an information processing method described in the next section.

A classical computer is used nowadays not only to solve academic problems in various fields of physics, chemistry, and engineering, but also for product development or various optimization problems in various industries daily. However, for many of these types of problems, computational resources required to handle more advanced problems increase explosively, making it impossible for the classical computer to handle these issues alone.

Therefore, quantum computers are being researched as a promising possibility to circumvent this difficulty. Although there are various types of problems known at present that may be solved more efficiently with a quantum computer than with a classical computer, many of the problems may be rewritten as problems for obtaining the lowest energy state of a physical system according to quantum mechanics, or for tracking time evolution of the physical system. Therefore, it is preferable to solve problems related to such a physical system on with a quantum computer in an efficient and resource-saving manner.

In practice, the quantum computer has unique constraints not found in the classical computer, thus a clever method needs to be devised to fulfill a goal under such constraints.

For an N qubit system, when considering a superposition state, an N qubit state may be expressed as a superposition of 2^N states. However, 2^N coefficients may be regarded as degree of freedom, and may be regarded as 2^N dimensional vectors. In this way, information on 2^N dimensional vectors may be represented by N qubits. Then, it is preferable to freely input any desired amount to the 2^N coefficients of the N qubits, including the degree of freedom of complex numbers. However, in general, it is difficult to directly output the 2^N coefficients. At least, it is only possible to perform a measurement and find out magnitudes of the 2^N coefficients from a measurement result. Moreover, for this purpose, it is necessary to simply perform measurements about 2^N times, and it is necessary to repeat an enormous number of measurements.

For instance, by setting an initial state for an N qubit system and performing imaginary-time evolution, a quantum state of an eigenvector of an operator L may be obtained. However, to extract information on the eigenvector, it is necessary to repeat an enormous number of measurements for about 2^N times. Even if number of gate operations may be reduced exponentially by using an imaginary-time evolution method, if an exponential measurement frequency is required, it is unable to enjoy benefit of a quantum algorithm.

In minimization problems, the problem is often mapped to an Ising Hamiltonian problem. In other words, if the Ising problem can be solved efficiently, then the minimization problem may be solved. Here, solving the Ising problem means finding a minimum eigenvalue state of the Ising Hamiltonian among various spin states.

Furthermore, finding the minimum energy state of a physical system means finding a minimum eigenvalue state of the Hamiltonian for a given electron system Hamiltonian. Thus, the minimization problem and finding the minimum energy state of a physical system are the same problem in the sense that finding the minimum eigenvalue state of each Hamiltonian. Assuming that the Hamiltonian is written as L. That is, the problem may be mathematically rephrased as finding a minimum eigenvalue λ_{min} and an eigenvector x_{min} thereof among eigenvalues satisfying Lx=λx (where x is a vector and λ is an eigenvalue).

Finding the minimum eigenvalue state of a given Hamiltonian has long been an important topic in quantum mechanics. An important solution thereof is an imaginary-time evolution method. By allowing an operator exp(-Lr) to act on an initial state vector x_0 (where τ is a real parameter and is a quantity called imaginary-time) and making the parameter τ sufficiently large (i.e., by allowing imaginary-time evolution), the initial state vector x_0 converges to a x_{min} vector except for a norm. In other words, if the operator exp(-Lτ) can be implemented on a quantum computer, the minimum eigenvalue x_{min} vector may be realized on a quantum computer. That is, by redefining the operator (-Lτ) as L, then in general, if it becomes possible to implement the operator expeL) on a quantum computer, it may lead to solving the minimum value problem and finding the minimum energy state of the physical system.

When given a non-unitary operator expeL) defined by the exponential function of a general operator L for a target qubit system, the operator expeL) is implemented by combining a unitary gate and a measurement on a quantum circuit with a few additional ancillary bits. For instance, while determination of circuit parameter requires exponential classical computation with respect to problem size, the method presented here benefits from being represented by polynomial time with respect to problem size. The use of such a circuit enables a desired operation to be probabilistically performed. In other words, when a measurement result of the ancillary bit is a specific one, the target qubit system in which the desired operation has been executed may be obtained.

Although the conventional method lacks probability, meaning the desired operation is executed with certainty, a computational cost is still not yet in a practical range. By realizing a tensor product of auxiliary bits and operation bits of a desired operation in a quantum circuit, executing a desired operation probabilistically depending on a state of a small number of ancillary bits and then using an existing method called quantum amplitude amplification in combination to amplify an occurrence probability of a predetermined state of the ancillary bit to ensure a realization probability of computation thereof, and selectively obtaining only a result where the ancillary bits are observed in a predetermined state, the present method realizes is capable of executing a desired operation with a practical probability with a significant lower computational cost than conventional methods.

When obtaining a minimum eigenvalue of an operator L and a quantum state of an eigenvector thereof, in particular, an enormous number of measurements, about 2^N times, need to be repeated to extract information on the eigenvector. In the present embodiment, instead of generating and measuring the eigenvector of a lowest eigenvalue for only 2^N times by the imaginary-time evolution method on the quantum computer and obtaining the eigenvector, the eigenvector of the lowest eigenvalue is generated only a few times by the imaginary-time evolution method on the quantum computer and passed through a quantum circuit such as quantum phase estimation (QPE) to first obtain the lowest eigenvalue. After obtaining the lowest eigenvalue (here denoted as λ_{min}), a kernel of an operator {L-λ_{min}} may be obtained on a classical computer to avoid exponential number of measurements of the qubits. Further description on this matter will be provided in following sections.

## 4. Information processing method

In this section, the above-mentioned quantum mechanical theory of functional composition will be supplemented, and an information processing method based thereon will be described.

Furthermore, figures referred to in this section are as follows. FIG. 3 is a quantum circuit implementing a time evolution operator exp(LΔt) with a general operator L as a generator. FIG. 4 is a quantum circuit implementing an imaginary-time evolution operator exp(-HΔτ) with a general Hermitian operator H as a generator. FIG. 5 is a quantum circuit equivalent to the quantum circuit in FIG. 4 within a first order of Δτ. FIG. 6 is a flowchart showing a procedure for executing a time evolution operator exp(LΔt) with a general operator L as a generator. FIG. 7 is a flowchart showing a procedure for obtaining a solution to a self-consistent equation using an imaginary-time evolution method.

### 4.1 Quantum circuit for time evolution operator with general operator as generator

When given a general operator L for an N qubit system, configuring a quantum circuit that implements a time evolution operator exp(LΔt) using this general operator L as a generator is considered in the present information processing. Δt is a small real number representing a time step. If the time evolution operator exp(LΔt) may be configured as a quantum circuit, then a time evolution operator exp(LNΔt) may be executed for any natural number N by repeating the quantum circuit.

A non-unitary Hermitian operator M from a real constant m0 is defined as shown in Equation 1. Further, a non-Hermitian unitary operator U is defined as shown in Equation 2.

[Equation 1]

$$\mathcal{M} \equiv m_0 e^{(L+L^\dagger)\Delta t}$$

[Equation 2]

$$\mathcal{U} \equiv e^{(L-L^\dagger)\Delta t}$$

Furthermore, a Hermitian operator Θ for an N qubit system is defined as shown in Equation 3.

[Equation 3]

$$\Theta \equiv \arccos \frac{\mathcal{M} + \sqrt{1 - \mathcal{M}^2}}{\sqrt{2}}$$

If κ and d0 are defined as shown in Equation 4 and Equation 5, respectively, then θ0 is defined as shown in Equation 6 usingκ and d0.

[Equation 4]

$$\kappa \equiv \mathrm{sgn}\left(m_0 - \frac{1}{\sqrt{2}}\right)$$

[Equation 5]

$$d_0 \equiv \frac{m_0 + \sqrt{1 - m_0^2}}{\sqrt{2}}$$

[Equation 6]

$$\theta_0 \equiv \kappa \arccos d_0$$

A quantum circuit 2 shown in FIG. 3 is defined as a quantum circuit for n+2 qubits. A gate W included therein is a single qubit transformation defined as shown in Equation 7. Ry shown in FIG. 3 is a y-rotation gate.

[Equation 7]

$$W \equiv \frac{1}{\sqrt{2}} \begin{pmatrix} 1 & -i \\ 1 & i \end{pmatrix}$$

When an n+2 qubit state configuring of an arbitrary N qubit state |ψ> (input bit 23) and an ancillary bit 21 and an ancillary bit 22 in a |0> state is input to the quantum circuit 2, an overall state changes as shown in Equation 8 within a first order of Δt just before a measurement. Ancillary bits such as the ancillary bit 21 and the ancillary bit 22 are called ancillary bits as well. As evident from a right side in Equation 8, upon measuring the ancillary bit 21 and the ancillary bit 22, if a state |0>⊗|0> is obtained at a measurement unit 211 and a measurement unit 221, then immediately afterward, the N qubit state, apart from a physically insignificant constant factor, becomes a desired state exp(LΔt)|ψ>.

[Equation 8]

$$|\psi\rangle \otimes |0\rangle \otimes |0\rangle \longmapsto \frac{1}{2}(\mathcal{M} + m_0\mathcal{U})|\psi\rangle \otimes |0\rangle \otimes |0\rangle + (\cdots)$$

This means that the operator exp(LΔt) for the N qubits may be implemented probabilistically using the quantum circuit 2. Since an operator exp(iκΘ) and an operator exp(-iκΘ) for the N qubits are unitary operators, the operator exp(iκΘ) and the operator exp(-iκΘ) may be implemented as unitary gates for N+2 qubits by combining ancillary bits.

To summarize, the information processing method comprises each step including: a conversion step of converting an operator for N qubits into a unitary gate using less than (n/2) ancillary bits, the unitary gate having a form that can implement the operator directly; and a circuit generation step of generating, based on the unitary gate, a quantum circuit that functions as a time evolution operator when the ancillary bit is observed as a predetermined state. According to such an aspect, number of exponential measurements of the quantum bit may be further suppressed.

4.2 Quantum circuit for imaginary-time evolution operator with general Hermitian operator as generator

Regarding the quantum circuit 2 shown in FIG. 3, if L is a Hermitian operator as a special case (again, the Hermitian operator H is employed instead of L in the following to explicitly indicate that the operator L is Hermitian), a desired operation may be implemented with a smaller number of ancillary bits. Moreover, examples of Hermitian operators include Electronic Hamiltonians and Ising Hamiltonians, but these are merely illustrative and not exhaustive.

Assuming a Hermitian operator H for an N qubit system is provided. An imaginary-time evolution operator exp(-HΔτ) specified by the Hermitian operator H and the real number Δτ is considered. Then, based on the imaginary-time evolution operator exp(-HΔτ) and the real constant m0, a non-unitary Hermitian operator M is defined as shown in Equation 9. M is a non-unitary operator.

[Equation 9]

$$\mathcal{M} \equiv m_0 e^{-\mathcal{H}\Delta\tau}$$

Further, a Hermitian operator Θ for an N qubit system is defined as shown in Equation 10.

[Equation 10]

$$\Theta \equiv \arccos \frac{\mathcal{M} + \sqrt{1 - \mathcal{M}^2}}{\sqrt{2}}$$

Considering to configure a quantum circuit to obtain M |ψ> when an arbitrary N qubit state |ψ> is given. To implement the operator M, consider a quantum circuit 3, shown in FIG. 4, as a quantum circuit for n+1 qubits.

When an N+1 qubit state configuring of an arbitrary N qubit state, |ψ> (input bit 33), and an ancillary bit 31, which is |0> state, is input to the quantum circuit 3, the overall state changes as shown in Equation 11 just before the measurement. As can be seen from a right side thereof, upon measuring the ancillary bit 31 and obtaining the |0> state at an observation unit 311, immediately afterward, the N qubit state (apart from a physically insignificant constant factor) becomes the desired state M |ψ>.

[Equation 11]

$$|\psi\rangle \otimes |0\rangle \longmapsto \mathcal{M}|\psi\rangle \otimes |0\rangle + \sqrt{1 - \mathcal{M}^2}|\psi\rangle \otimes |1\rangle$$

This means that the quantum circuit 3 can be used to implement the imaginary-time evolution operator M for N qubits in a probabilistic manner. Further, since the operator exp(iκΘ) and the operator exp(-iκΘ) for N qubits are unitary operators (more precisely, real-time evolution operators), they can be implemented as unitary gates for N+1 qubits by combining ancilla bits.

In other words, the conversion unit 133 preferably converts the operator so as to have a form using only the time evolution operator and other unitary operator in the conversion step. The time evolution operator includes a Hermitian operator.

Specifically, the conversion unit 133 converts the operator so as to have a form using only the real-time evolution operator and other unitary operator in the conversion step. The real-time evolution operator includes a unitary operator. The time evolution operator can be generated by the Hermitian operator H. The form of the time evolution operator is arbitrary and not limited thereto. For instance, the form of the time evolution operator may be a form in which the operator appears in an expression thereof or in which the operator corresponds as an element of a set.

4.3 Equivalent transformation of quantum circuit with Hermitian operator as generator

Since exp(iκΘ) and exp(-iκΘ) included in the quantum circuit 3 shown in FIG. 4 are unitary operators, they can in principle be implemented as unitary gates. However, a specific method to implement a unitary operator Θ in Equation 10 directly as a unitary gate is not obvious. Therefore, if the quantum circuit 2 shown in FIG. 3 can be approximated (transformed into a circuit that is exactly equivalent within a finite order of mathematical expansion) to another circuit that performs the same computation, the circuit would be beneficial for practical quantum computation. The equivalent transformation will be described below.

S_{1} is defined as shown in Equation 12. Using S_{1}, a unitary operator U_ {RTE} is defined as shown in Equation 13.

[Equation 12]

$$s_1 \equiv \frac{m_0}{\sqrt{1-m_0^2}}$$

[Equation 13]

$$U_{\mathrm{RTE}} \equiv e^{-is_1\mathcal{H}\Delta\tau}$$

When an N+1 qubit state configuring of an arbitrary N qubit state |ψ> (input bit 33) and one ancillary bit 31 that is in the |0> state is input to the quantum circuit 3, the overall state changes within the first order of Δτ as shown in Equation 14 just before the measurement. The state after this change coincides with the state in Equation 11 within the first order of Δτ. This means that a quantum circuit 4 shown in FIG. 5 is equivalent to the quantum circuit 3 shown in FIG. 4 within the first order of Δτ.

[Equation 14]

$$|\psi\rangle \otimes |0\rangle \otimes |0\rangle \longmapsto m_0(1-\mathcal{H}\Delta\tau)|\psi\rangle \otimes |0\rangle + \left(\sqrt{1-m_0^2} + \frac{m_0^2}{\sqrt{1-m_0^2}}\mathcal{H}\Delta\tau\right)|\psi\rangle \otimes |1\rangle$$

exp(is_{ 1 } HΔτ) and exp(-is_{1}HΔτ) are unitary real-time evolution operators, and various methods have already been proposed to efficiently implement these operators as quantum gates. Therefore, those existing methods can be directly appropriated for the present method.

By implementing the imaginary-time evolution operator as a quantum circuit and iterating the quantum circuit, the time evolution operator exp(LNΔt) can be implemented for the desired natural number N. Here, the ancillary bit must produce a |0> state to correctly compute each imaginary-time step. By allowing the amplitude (probability) of the ancillary bit taking the |0> state to amplify at each imaginary-time evolution step, the time evolution operator exp(LΔt) can be executed with higher probability.

Amplification of the amplitude of the ancillary bits being in the |0> state can be achieved by interposing a quantum amplitude amplification circuit as one method. That is, preferably, the quantum circuit may further include a quantum amplitude amplification circuit capable of enhancing the probability that the ancillary bit is observed as a predetermined state. As for a general operator L, the operator exp(LNΔt) can be implemented on a quantum computer to realize a quantum circuit that allows the operator exp(LNΔt) to act on an arbitrary initial state.

However, in the case of the general operator L, the lowest eigenvalue is not necessarily a real number, and the eigenvalue is only guaranteed to be a real number only if the operator L is a Hermitian operator. If the operator L is a regular non-Hermitian operator, when the imaginary-time evolution operator exp(LNΔt) is allowed to act on an arbitrary initial state with a sufficiently large number N, a result of the operation converges to an eigenstate that corresponds to an eigenvalue with a smallest real part among the eigenvalues of L. However, it should be noted that a quantum circuit representing the operator exp(LNΔt) can be realized even if L is not regular.

Hereinafter, information processing of quantum imaginary time evolution will be illustrated with reference to FIG. 6. First, an initial state of an arbitrary qubit is set as an initial value setting. Further, a counter k is set to 1 for loop processing described later (step S101).

Subsequently, the calculation unit 135 executes quantum imaginary-time evolution (step S 102). Specifically, the calculation unit 135 functions as an execution unit of the quantum imaginary-time evolution, and is executed by a quantum circuit representing a quantum imaginary-time evolution step using a small number of ancillary bits.

Then, the calculation unit 135 executes quantum amplitude amplification (step S103). Specifically, the calculation unit 135 functions as an execution unit of the quantum amplitude amplification, and the quantum amplitude amplification is executed by a quantum circuit allowing a probability that the state of the ancillary bit is in |0> state to amplify. Preferably, this is an operation that is interposed just before performing a measurement in the execution of quantum imaginary-time evolution and is inserted to increase the probability of observing a predetermined state in the ancillary bit.

The calculation unit 135 then determines whether a value of the counter k is number of loops N (step S 104). If the value of the counter k is less than N, the value of the counter k is incremented by 1 (step S105) and the processing returns to step S102. In other words, step S102 and step S103 only need to be repeated the number of loops N. In the present embodiment, although the case in which the quantum circuit generation apparatus 1 is a classical computer is employed as an example, the processing may be performed in either case.

When the value of the counter k is N, the calculation unit 135 executes processing of obtaining at least one of the eigenvalue and the eigenvector (step S 105) and then terminates the processing. More specifically, after performing N times of quantum imaginary-time evolution, the calculation unit 135 functions as an execution unit that obtains one or both of the eigenvalue and the eigenvector.

Furthermore, the above problem as an eigenvalue problem when the operator L itself depends on the eigenvector can be generalized. To explicitly express that the operator L depends on an eigenvector x, the operator L is rewritten as an operator A(x). A fact that the operator L depends on the eigenvector x is a method often used to pseudo-linearize a problem when solving a nonlinear equation, and is also used in various situations in physics, such as density functional theory. However, the present embodiment is not limited thereto.

Referring to FIG. 7, a procedure for executing an imaginary-time evolution when performing a self-adjoint computation to obtain x in $A(x)x=\lambda x$ will be described. Note that x is a vector and an unknown, $\lambda$ is an unknown, and A(x) is an operator that depends on a vector of arguments, which can be expressed as a finite-dimensional matrix acting on a given number of qubits. When the argument of A is a constant vector, an equation to be solved is a linear equation.

First, the calculation unit 135 sets an initial value of the operator as A(y) using some vector y (step S201). Such processing may be performed by a classical computer. In other words, in the calculation step, the calculation unit 135 may preferably have the classical computer compute parameters defining the quantum circuit only for a first time when the quantum circuit is applied iteratively in this manner.

The calculation unit 135 then sets an initial state of an arbitrary qubit (step S202).

The counter k is then set to 1 for the loop process described later (step S203).

Subsequently, the calculation unit 135 executes the quantum imaginary-time evolution (step S204). Specifically, the calculation unit 135 functions as an execution unit of the quantum imaginary-time evolution, which is executed by a quantum circuit that represents the quantum imaginary-time evolution step using a small number of ancillary bits.

Then, the calculation unit 135 executes quantum amplitude amplification (step S205). Specifically, the calculation unit 135 functions as an execution unit of the quantum amplitude amplification, and the quantum amplitude amplification is executed by a quantum circuit allowing a probability that the state of the ancillary bit is in |0> state to amplify. Preferably, this is an operation that is interposed just before performing a measurement in the execution of quantum imaginary-time evolution and is inserted to increase the probability of observing a predetermined state in the ancillary bit.

The calculation unit 135 then determines whether a value of the counter k is number of loops N (step S206). If the value of the counter k is less than N, the value of the counter k is incremented by 1 (step S207) and the processing returns to step S204. In other words, step S204 and step S205 only need to be repeated the number of loops N.

When the value of the counter k is N, the calculation unit 135 executes processing of obtaining at least one of the eigenvalue and the eigenvector (step S208). More specifically, after performing N times of quantum imaginary-time evolution, the calculation unit 135 functions as an execution unit that obtains one or both of the eigenvalue and the eigenvector of A(y). In other words, in the calculation step, when acquiring an eigenvector of a matrix or an operator that corresponds to an eigenvalue with a smallest real part, the calculation unit 135 acquires the eigenvector as a qubit state.

The calculation unit 135 then updates the operator A(y) on the operator A(x) based on information on the eigenvalue $\lambda$ and the eigenvector x output (step S209). That is, preferably, the calculation step includes loop processing of updating a configuration of the quantum circuit according to each result of the time evolution operators when solving an eigenvalue problem of a linear operator including self-consistent field problem using the time evolution operator.

Then, the calculation unit 135 determines convergence of the operator A, the eigenvalue $\lambda$, and the eigenvector x (step S210). If at least one of these operators and eigenvalue does not converge, the processing returns to step S202, and if convergence is achieved, then the processing is terminated.

5. Example

In this section, an example of the method described in the above embodiment will be illustrated. Here, quantum computation for obtaining a wavefunction of a ground state of a quantum mechanical particle using an imaginary-time evolution method will be described. A Hamiltonian H in the physical system is a Hermitian operator, and in the imaginary-time evolution method, it is known that the particle reaches the ground state (or equivalently, a lowest eigenvalue state) by iteratively applying a non-unitary operator $\exp(-H\Delta\tau)$ to an initial state of the particle. This method is widely used for a classical computer.

A problem setup in the present example is as follows. Here, as an example, the imaginary-time evolution method will be used to obtain a ground electronic state confined in a one-dimensional well potential. An interval of length 10 in one-dimensional space is divided into 64 equally spaced points. In other words, in a current problem, a ground state with a 64-dimensional vector and an eigenvalue thereof are obtained. To obtain the eigenvector on a quantum computer, 6 qubits are considered. Further, coefficients of each of 2^6 independent states represented by the 6 qubits are assigned to each component of the 64-dimensional vector.

In this case, a state of the qubits is represented as |ψ>=Σ_{j=0}^{63}c_j|j>. It is sufficient if a coefficient c_j can be determined by the imaginary-time evolution method so as to represent the ground state. FIG. 8 shows a correct ground state in the example and an initial state of the imaginary-time evolution computation. In FIG. 8, a horizontal axis represents a real space (one-dimensional in this case) and a vertical axis represents an amplitude of a wavefunction. A curve shown as (A) in the figure is a correct underlying wavefunction (or eigenvector with the smallest eigenvalue of the Hamiltonian). For this verification, an initial state of a curve shown as (B) in the figure is selected and input as the state of the qubits. The state of the curve is selected only as an example, and any initial state may be used. For the initial state, a quantum circuit of quantum imaginary-time evolution is passed through.

When the non-unitary operator $\exp(-H\Delta\tau)$ is implemented as the quantum circuit 4 shown in FIG. 5, $\Delta\tau$ is set to 0.15, and a 15-step imaginary-time evolution computation is executed on a quantum computer, a result in FIG. 9 is simulated on a classical computer. FIG. 9 shows a correct ground state in the example as well as a success state and a failure state of the imaginary-time evolution computation.

The success state in the figure represents a state of the particle when |0> is obtained as a result of the ancillary bit measurement, and the failure state represents a state of the particle when |1> is obtained as a result of the ancillary bit measurement. According to the figure, a success state shown as (E) in the figure is approximately identical to a correct ground state shown as (C) in the figure, confirming that the method works correctly as a quantum computation method. Further, a curve shown as (D) in the figure is an example of a failure state of the imaginary-time evolution computation.

By iteratively repeating a series of imaginary-time evolution operations, a ground state vector is obtained. The ground state vector is then output through observation. There are several methods to output the eigenstate vector. Here, two methods are listed as examples. The only information about the eigenvector obtained in a single measurement is that for a qubit state |ψ>= Σ_{j=0}^{63}c_j|j>, one state |k> is obtained with a probability of |c_k|^2 (square of an absolute value). There is a method to output the information of eigenvector by repeating the measurement many times to obtain |c_k|^2 (square of the absolute value).

Another example of a method to obtain the eigenvector is to obtain the basis eigenvalue λ prior to the eigenvector for the obtained ground state vector as a qubit state. As a method for obtaining the basis eigenvalue, the eigenvector before measurement may be used to output an expected value of the operator A, or quantum phase estimation (QPE) may be used to output the expected value of the operator A. In this way, the basis eigenvalue may be obtained, and then a kernel of an operator {A-λI} may be used to obtain the eigenvector by using a classical computer.

In other words, in the calculation step, the calculation unit 135 obtains an eigenvector of a given linear operator as a qubit state. Based on quantum computation using the eigenvector of the qubit state as input, the calculation unit 135 newly obtains an eigenvalue, thereby converting the problem of obtaining the eigenvector into a problem of determining a kernel of a matrix.

By following the above steps, a 64-dimensional eigenvector on 6 qubits may be output.

## 6. Another example of information processing method

In this chapter, another example of the information processing method will be described while supplementing the quantum mechanical theory regarding the functional configuration mentioned above. The information processing method described in the present chapter may be regarded as another example of quantum amplitude amplification for the state generated by executing the quantum imaginary-time evolution described in Chapter 4. In the following description, as before, an operator, a quantum circuit corresponding to the operator, and a quantum operation corresponding to the operator may be denoted by the same member number. In addition, subscripts representing integers, such as m and n, may be the same symbol or different values. Furthermore, in the following description, quantum imaginary-time evolution may be denoted simply as imaginary-time evolution. In FIGS. 10 to 18 used in the following description, the quantum bit is denoted as input and the ancillary bit is denoted as Ancilla, similar to FIGS. 3 to 5 mentioned above. For convenience of explanation, a quantum circuit with one ancillary bit is sometimes described, but the number of ancillary bits is not limited thereto.

The information processing method described in the present chapter may be used to further increase the probability that an ancillary bit is observed as a predetermined state in the information processing proposed in Chapter 4.

6.1 Another example of quantum amplification circuit

FIG. 10 shows an example of a quantum circuit equivalent to the quantum circuit shown in FIG. 5. For convenience of explanation, a quantum circuit equivalent to quantum circuit 4 shown in FIG. 5 is hereinafter simply referred to as a quantum circuit 5. The quantum circuit 5 is configured to allow an uncontrolled unitary gate U_{RTE} to act on an N qubit system, and then allow a controlled unitary gate U_{RTE}^†^2 (Hermitian conjugate of a square of the unitary gate U_{RTE}) to act with the ancillary bit as a control bit. With such transformation, one controlled unitary gate U_{RTE} included in the quantum circuit 4 is replaced by an uncontrolled unitary gate U_{RTE}. This reduces the number of gates included in the quantum circuit functioning as the imaginary-time evolution operator exp(-HΔτ). In FIG. 10, the quantum circuit 5 can be obtained by excluding the control gate of the unitary operator U_{RTE} from the quantum circuit 4, but similarly the controlled unitary operator U_{RTE}^2 can be obtained by excluding the control gate of the unitary operator U_RTE]^†. The quantum gate operations can be reduced in the same way for the quantum circuit discussed below.

6.2 Quantum circuit for imaginary-time evolution combined with quantum amplitude amplification

6.2.1 Regarding quantum amplitude amplification operator in imaginary-time evolution method

Next, in preparation for combined use of the imaginary time evolution method and the quantum amplitude amplification method, a description will be given using a quantum circuit U_PITE.

<Quantum circuit U_PITE>

The quantum circuit U_PITE is configured to act on a state of N+1 qubits, including the N qubits and the ancillary bit. The quantum circuit U_PITE is configured to sequentially act on a reference circuit U_ref that acts on the N qubits and the quantum circuit C_PITE (i.e., the quantum circuit 3) that implements the real-time evolution operator exp(-iκΘ) with the Hermitian operator Θ as the generator. Specifically, the quantum circuit U_PITE is represented by a product of the reference circuit U_ref and the quantum circuit C_PITE as shown in Equation 15.

[Equation 15]

$$\mathcal{U}_{\mathrm{PITE}} \equiv \mathcal{C}_{\mathrm{PITE}}(U_{\mathrm{ref}} \otimes I_2)$$

<Reference circuit U_ref>

The reference circuit U_ref is a quantum circuit for generating an N qubit state |ψ> from an N qubit state among the N+1 qubit states input to the quantum circuit U_PITE. Specifically, the reference circuit U_ref generates an N qubit system configuring of the desired |ψ> state by inputting an N qubit system configuring of $|0>^{\otimes n}$ state. This generates an N+1 qubit system configuring of one ancillary bit set to the |0> state and the |ψ> state. The reference circuit U_ref may be set appropriately according to the N qubit state |ψ> to be generated. The reference circuit U_ref functions as a quantum circuit for inputting an N+1 qubit system configuring of |ψ>⊗|0> state.

<Quantum circuit C_PITE>

The quantum circuit C_PITE is represented, for example, by the quantum circuit 3 shown in FIG. 4. The quantum circuit C_PITE is configured to act on the N+1 qubit system configuring of |ψ>⊗|0> state. As a result, a state in which the imaginary time evolution operator exp(-HΔτ) with the general Hermitian operator H as the generator is allowed to act on the N qubit system can be obtained probabilistically. Such a quantum circuit C_PITE is configured to be capable of polynomial expansion using the time step Δτ as a parameter. Hereinafter, for convenience of explanation, a quantum circuit equivalent within the first order of Δτ of C_PITE will be referred to as a quantum circuit C_PITE^(1).

By the quantum circuit U_PITE acting on the $|\psi>^{\otimes n}\otimes|0>$ state configured of the above N+1 qubit, as shown on a right side of Equation 11, when the ancillary bit is in the |0> state, a state in which the imaginary time evolution operator exp (-HΔτ) is applied to the N qubit system configured of the |ψ> state may be obtained. For convenience of explanation, a state in which the imaginary-time evolution operator exp (-HΔτ) acts is referred to as |ψ_success>, and a state in which the imaginary-time evolution operator exp (-HΔτ) does not act correctly is referred to as |ψ_failure>. Equation 11 can be represented as in Equation 16.

[Equation 16]

$$\mathcal{U}_{\mathrm{PITE}}(|0\rangle^{\otimes n}\otimes|0\rangle)=\sin\theta_a|\psi_{\mathrm{success}}\rangle\otimes|0\rangle+\cos\theta_a|\psi_{\mathrm{failure}}\rangle\otimes|1\rangle$$

Here, a coefficient of |ψ_success> is denoted as sinθ_a and a coefficient of |ψ_failure> is denoted as cosθ_a. As a result, |ψ_success> and |ψ_failure> are both normalized.

$|\psi>_{\mathrm{success}}\otimes|0>=|\Psi_{\mathrm{good}}>$ and $|\psi_{\mathrm{failure}}>\otimes|1>=|\Psi_{\mathrm{bad}}>$ are defined as notations for the N+1 qubit state including the ancillary bit. The |Ψ_good> state and the |Ψ_bad> state are normalized and orthogonal to each other. cosθ_a corresponds to the coefficient of the qubit state (|ψ_failure> state) when the ancillary bit in the present embodiment is observed as a state (|1> state) different from the predetermined state (|0> state). Further, sinθ_a corresponds to the coefficient of the qubit state |ψ_success> when the ancillary bit in the present embodiment is observed as the predetermined state (|0>state). When quantum amplitude amplification is performed on two states, |ψ_good> state and |ψ_bad> state, the state represented by Equation 16 changes to Equation 17.

[Equation 17]

$$Q^m|\Psi\rangle=\sin[(2m+1)\theta_a]|\Psi_{\mathrm{good}}\rangle+\cos[(2m+1)\theta_a]|\Psi_{\mathrm{bad}}\rangle$$

Q is an amplitude amplification operator. The amplitude amplification operator Q represents quantum amplitude amplification for the N+1 qubit system. m is amplification frequency (number of amplifications) to which the amplitude amplification operator Q is applied. A relationship between the amplification frequency m and θ_a in such a manner that the coefficient of the Ψ_good> state is maximized is represented by Equation 18.

[Equation 18]

$$m=\frac{\pi}{4\theta_a}(2k-1)-\frac{1}{2}$$

K is an arbitrary integer. Based on such a relationship, the controller 13 can determine more optimal amplification frequency m based on the previously obtained θ_a. The θ_a can be obtained, for example, through a success probability estimated in advance. The success probability corresponds to a probability of observing |ψ_success>. The controller 13 can amplify a probability of obtaining the desired |ψ_good> state by repeatedly allowing the amplitude amplification operator Q to act for the amplification frequency m computed in this way. Note that the amplification frequency m is not limited to the case where the coefficient of |Ψ_good> state is maximized, but may be a value within a range in which a ratio (tanθ_a in the present embodiment) of the coefficient of the qubit state when the ancillary bit is observed as a different state from the predetermined state to the coefficient of the qubit state when the ancillary bit is observed as the predetermined state is equal to or greater than a predetermined allowable value. The ratio corresponds to the success probability.

Here, details of the amplitude amplification operator Q will be described. FIG. 11 shows an example of a quantum circuit that implements the amplitude amplification operator Q in an exact imaginary-time evolution method. The amplitude amplification operator Q allows an oracle S_χ to act and then allows a zero reflection S_0 sandwiched between U_PITE and U_PITE^† to act. Specifically, the amplitude amplification operator Q is defined by Equation 19.

[Equation 19]

$$Q\equiv-\mathcal{U}_{\mathrm{PITE}}S_0\mathcal{U}_{\mathrm{PITE}}^{\dagger}S_\chi$$

<Zero reflection S_0>

A reflection operator S_φ is an operation that reverses a sign of a specific state|φ> among the N qubit states, but does not change other states. The reflection operator S_φ whose specific state|cp> is|0...0> is referred to as the zero reflection S_0.

<Oracle S_χ>

The oracle S_χ performs an operation that reverses a sign of a state orthogonal to a state to be amplified (here refers to the |Ψ_bad> state). The zero reflection S_0 can be implemented as an algorithm-independent quantum circuit combined with quantum amplitude amplification. The oracle S_χ can be implemented as a quantum circuit that corresponds to such an algorithm (the imaginary-time evolution method in the present embodiment) as appropriate.

6.2.2 Construction of quantum circuit corresponding to quantum amplitude amplification operator

The oracle S_χ in the imaginary-time evolution method may be constructed so as to reverse the sign when the ancillary bit is in the |1> state. Therefore, the oracle S_χ can be represented as in Equation 20.

[Equation 20]

$$S_\chi = I_{2^n} \otimes (\sigma_x \sigma_z \sigma_x)$$

In this case, the oracle S_χ can be implemented as a single qubit operation acting on the ancillary bit. Therefore, the amplitude amplification operator Q can be implemented as a quantum circuit 6 as shown in FIG. 11. Although the quantum circuit 6 corresponds to the amplitude amplification operator Q in the imaginary-time evolution method equivalent within the first order of time step Δτ, a quantum circuit corresponding to the amplitude amplification operator in the imaginary-time evolution method equivalent within a higher order and the amplitude amplification operator in the exact imaginary-time evolution method can also be implemented as in the same way as the quantum circuit 6.

An operator configuring of a product of the operator Q^m that repeatedly allows the amplitude amplification operator Q to act for the amplification frequency m and the unitary operator U_PITE can be transformed as shown in Equation 21.

[Equation 21]

$$Q^m \mathcal{U}_{\mathrm{PITE}} = \left(-\mathcal{U}_{\mathrm{PITE}} S_0 \mathcal{U}_{\mathrm{PITE}}^\dagger S_\chi\right)^m \mathcal{U}_{\mathrm{PITE}} = \mathcal{U}_{\mathrm{PITE}} \left(-S_0 \mathcal{U}_{\mathrm{PITE}}^\dagger S_\chi \mathcal{U}_{\mathrm{PITE}}\right)^m = \mathcal{U}_{\mathrm{PITE}} \widetilde{Q}^m$$

A pre-amplitude amplification operator Q~ is defined as in Equation 22.

[Equation 22]

$$\widetilde{Q} \equiv -S_0 \mathcal{U}_{\mathrm{PITE}}^\dagger S_\chi \mathcal{U}_{\mathrm{PITE}}$$

FIG. 12 shows an example of a quantum circuit that implements the exact pre-amplitude amplification operator corresponding to the imaginary-time evolution operator exp(-HΔτ). FIG. 13 shows an example of a quantum circuit that implements the pre-amplitude amplification operator Q~ corresponding to the equivalent imaginary-time evolution operator exp(-HΔτ) within the first order of Δτ.

The pre-amplitude amplification operator Q~ corresponding to a quantum circuit for exact imaginary-time evolution can be implemented as a quantum circuit 7 shown in FIG. 12. In particular, if the quantum circuit U_PITE is equivalent to the quantum circuit 4 within the first order of time step Δτ, the pre-amplitude amplification operator Q~ can be implemented as a quantum circuit 8 shown in FIG. 13. The quantum circuit 7 and the quantum circuit 8 are examples of the pre-amplitude amplification circuit.

The quantum circuit 8 is first configured to allow the reference circuit U_ref to act on the input N qubit system. This generates an N qubit system configured of the desired |ψ> state. Next, the quantum circuit 8 is configured to allow one of U_{RTE}^2 and U_{RTE}^†^2 to act on the N qubit system configured of the generated |ψ> state. Next, the quantum circuit 8 is configured to sequentially apply U_ref^† to the N qubit system, and to apply a rotational gate operation R_z (-4θ_0) and an X-gate operation σ_z to the ancillary bit. Then, the quantum circuit 8 is configured to allow the zero reflection S_0 to sequentially act on the N+1 qubit system. That is, the pre-amplitude amplification operator Q~ includes at least a reflection operator S_φ that, when the state of the (N) qubits is a specific state |φ>, reverses the sign of the specific state |φ>. In the present embodiment, the pre-amplitude amplification operator Q~ includes at least the zero reflection S_0 as the reflection operator S_φ. In addition to the above operation, the quantum circuit 8 is configured in such a manner that a Hadamard operation H, etc. is allowed to act on the ancillary bit as appropriate.

According to a relationship of Equation 12 and Equation 13, U_{RTE}(s_{1}Δτ)^2 is equal to U_{RTE}(2s_{1}Δτ). Thus, the unitary operator U_{RTE}^2 can be implemented in such a manner that the number of operations of U_{RTE}^2 is equal to the number of operations of U_{RTE}. Therefore, the quantum circuit 8 shown in FIG. 13 is configured to perform quantum amplitude amplification for the desired |ψ> state, similar to the amplitude amplification operator Q implemented by the quantum circuit 6 shown in FIG. 11. On the other hand, the quantum circuit 8 shown in FIG. 13 has fewer gate operations than the quantum circuit 6 shown in FIG. 11. This is because, compared to implementing the amplitude amplification operator Q as in the quantum circuit shown in FIG. 11, it is better to implement it on the quantum circuit as the pre-amplitude amplification operator Q~ acting one of U_{RTE}^2 and U_{RTE}^†^2 as in FIG. 12 or FIG. 13, which means that depth of the quantum circuit can be reduced only by the controlled unitary operator U_{RTE} and the controlled unitary operator U_{RTE}^†. Such a reduction in depth of the quantum circuit can be achieved by a transformation as shown in Equation 21. The transformation in Equation 21 is ingenious as focuses on a fact that the oracle S_χ is an operator acting only on one qubit, and discovers that the oracle S_χ is sandwiched between the quantum circuit U_PITE and an adjoint matrix U_PITE^† thereof.

Thus, the pre-amplitude amplification operator Q~ is a unitary operator capable of increasing the probability amplitude (i.e., the coefficient sinθ_a) that the ancillary bit is in a predetermined state (|0>) by acting on the qubit and the ancillary bit, and includes at least the time evolution operator exp(iΘτ) corresponding to the operator.

FIG. 14 shows an example of a quantum circuit when the quantum amplification method based on the pre-amplitude amplification operator is applied to the imaginary-time evolution method. A quantum circuit 9 is first configured in such a manner that the pre-amplitude amplification operator Q~ acts on the input N+1 qubit system repeatedly for the amplification frequency m. As a result, the sinθ_a increases and proportion of the |Ψ_good> state increases. The quantum circuit 9 is then configured in such a manner that the quantum circuit C_PITE implementing the imaginary time evolution operator exp(-HΔτ) acts. The quantum circuit for applying the quantum amplitude amplification method based on the pre-amplitude amplification operator to the imaginary-time evolution method is not limited to the case where the quantum circuit C_PITE implementing the imaginary-time evolution operator exp (-HΔτ) is a quantum circuit 8 that is equivalent within the first order of Δτ, but can also be constructed in the same way, whether as a quantum circuit equivalenting within a higher order of Δτ or as a quantum circuit for exact imaginary-time evolution.

6.2.3 Determination of γ to minimize number of repetition of amplitude amplification

An optimal value of the number of amplification repetition m (the amplification frequency m in such a manner that the coefficient of |Ψ_good> after amplification is maximized) depends on the coefficient of the state before quantum amplification, as shown in Equation 17. Therefore, if the amplification frequency m is set without any consideration, the amplification frequency m may unintentionally become large, resulting in an unnecessarily large number of operations.

Therefore, the present embodiment focuses on a fact that the success probability is a function of a real constant m0 introduced in the quantum circuit implementation, and proposes a method for determining the real constant m0 that minimizes the amplification frequency m. As mentioned above, the coefficient of the state before quantum amplification depends on θ_a, and the θ_a is correlated with the success probability. Therefore, the real constant m0 is correlated with θ_a. Hereinafter, the real constant m0 will also be referred as γ.

The success probability using the exact imaginary-time evolution method without quantum amplitude amplification is proportional to γ^2. The success probability when using the equivalent imaginary-time evolution method within the first order of Δτ is also proportional to γ^2 within the first order of Δτ. Therefore, a condition that the amplification frequency m and the parameter γ must satisfy for the success probability to be 1 is given by Equation 23. Note that n is an arbitrary nonnegative integer.

[Equation 23]

$$\gamma = \frac{1}{\alpha}\sin\left(\frac{(2n+1)\pi}{4m+2}\right)$$

α is represented as in Equation 24.

[Equation 24]

$$\alpha^2 \equiv \langle\psi|e^{-2\mathcal{H}\Delta\tau}|\psi\rangle$$

A possible range of the parameter γ is 0<γ<1 and γ≠1/√2. The controller 13 shall search for a set of parameters (m, γ, n) that satisfy Equation 23 in this range, and adopt a smallest m in the set as the amplification frequency m.

For instance, if Δτ is small and (m, n)=(1, 1), then α^2≈1-2Δτ<ψ|H|ψ>≈1±Δ, a right side of Equation 23 becomes 1/2+Δ/4. This Δ is a sufficiently small amount compared to 1. If Δ is small enough, the parameter γ satisfies the condition 0<γ<1 and γ≠1/√2. In this case, the quantum amplification need only act once, which is desirable in terms of the number of operations.

Note that the controller 13 does not need to adopt m, which exactly satisfies the condition in Equation 23, as the amplification frequency m using the above method. For example, the controller 13 may search for a set of parameters (m, γ, n) in the case where the success probability is equal to or greater than a predetermined tolerance value, as in Equation 23, and adopt the smallest m among the set as the amplification frequency m.

6.2.4 Probabilistic imaginary-time evolution to separable state obtained by combining probabilistic imaginary-time evolution and quantum amplitude amplification

Next, a case where a combination of the probabilistic imaginary-time evolution and the quantum amplitude amplification is used repeatedly will be described. As shown in Equation 17, the state of the N+1 bit system generated through the quantum circuit corresponding to the quantum circuit U_PITE and the amplitude amplification operator Q (including the quantum circuit 9 shown in FIG. 14) may be a superposition state of |Ψ_good> and |Ψ_bad>. However, the state input to the quantum circuit U_PITE is preferably a state in which |Ψ_good> and |Ψ_bad> are nearly separable.

Here, when the optimal γ and m are employed by the method, the quantum amplitude amplification operator Q^m acts to obtain the |Ψ_good> state with a probability of almost 100%. This indicates that the I'P _good> and |Ψ_bad> states are almost separable. In this case, it is possible to not measure the ancillary bit in the first step and use it as the ancillary bit in the second step.

FIG. 15 shows an example of a quantum circuit C_{two} that implements two successive imaginary-time evolution operators exp(-HΔτ). A first step imaginary-time evolution and a second step imaginary-time evolution can be implemented by the quantum circuit C_{two} shown in FIG. 15. The quantum circuit C_{ two } includes a control time evolution operator U_{RTE} and a companion matrix U_{RTE}^† thereof, similar to the quantum circuit 8 for pre-amplitude amplification (see FIG. 13 for detail). This is preferable from a viewpoint of the number of operations rather than providing two quantum circuits as shown in FIG. 10. The parameters of the imaginary-time evolution operator U_{RTE} in the first step are denoted as s_1, Δτ_1, and θ_1. Further, the parameters of the imaginary-time evolution operator in the second step are represented as s_2, Δτ_2, and θ_2.

6.2.5 Probabilistic imaginary-time evolution after second step

Next, a case will be described in which a quantum circuit (for example, the quantum circuit 9) that used both the imaginary-time evolution and the quantum amplitude amplification up to the previous step is employed as the reference circuit U_ref for imaginary-time evolution in the next step. FIG. 16 shows an overview of a quantum circuit implementing the reference circuit U_ref in the previous step. A reference circuit U_ref^[2] in the second step is represented as in Equation 25.

[Equation 25]

$$U_{\mathrm{ref}}^{[2]} = \mathcal{U}_{\mathrm{PITE}}\widetilde{Q}^{m}$$

Hereinafter, for convenience of explanation, a reference circuit in an n-th step is denoted as U_ref^[n]. The reference circuit U_ref^[n] in the second and subsequent steps is implemented on the quantum circuit so as to act on the ancillary bit as well. The reference circuit U_ref^[2] is represented as the quantum circuit 9 on an upper side in FIG. 16. For convenience of explanation, the quantum circuit 9 may also be denoted as a quantum circuit 9-1.

When a quantum circuit implementing the second step imaginary-time evolution operator exp(-HΔτ) is implemented in a quantum circuit with U_ref^[2] as the reference circuit, a state in which the second step imaginary-time evolution operator exp(-HΔτ) acts on the N+1 qubit system may be obtained probabilistically. If quantum amplification is performed on the probabilistically obtained state in the same way as in the first step, a state in which the imaginary-time evolution operator exp (-HΔτ) acts twice can be obtained as a separable state. This reference circuit U_ref^[3] is represented as a quantum circuit on a lower side in FIG.16. Similarly, a quantum circuit 9-2 on a lower right side in FIG. 16 is used as the reference circuit U_ref^[3] in a third step. Such steps may be sequentially performed repeatedly. In this way, the quantum circuit 9-1 and the quantum circuit 9-2 are configured to allow the quantum circuit U_PITE further generated without observing the ancillary bits to act on the qubit and the ancillary bit on which the pre-amplitude amplification operator Q~ is allowed to act. Hereafter, for convenience of explanation, the quantum circuit configured to allow a quantum circuit further generated without observing the ancillary bits to act will be referred to as a second quantum circuit CQ. In other words, the quantum circuit 9-1 and the quantum circuit 9-2 are examples of the second quantum circuit CQ.

Next, an example of generation method of a quantum amplitude amplification circuit when the above discussion is generalized to the n-th step will be described. A reference circuit U_ref^[n] for an n-th step is represented as in Equation 26.

[Equation 26]

$$U_{\mathrm{ref}}^{[n]} = \mathcal{U}_{\mathrm{PITE}}^{[n-1]} \widetilde{Q}_{n-1}^{m}$$

Here, an unitary operation (the imaginary-time evolution operator exp (-HΔτ) and a reference circuit) in the n-th step is denoted as U_PITE^[n], the pre-amplitude amplification operator is denoted as Q~_n, and the number of iterations of the pre-amplitude amplification operator is denoted as m_{n}. As a result of following such a procedure, a state in which the imaginary-time evolution operator exp (-HΔτ) acts for N_τ steps can be obtained as a separable state.

In this case, the unitary operation U_PITE^[N_τ] for obtaining a state in which the imaginary-time evolution operator exp(-HΔτ) acts on a reference circuit U_ref^[N_τ] in a N_τ step is represented as in Equation 27.

[Equation 27]

$$\mathcal{U}_{\mathrm{PITE}}^{[N_\tau]} = \mathcal{C}_{\mathrm{PITE}}^{(1)}(\gamma_{N_\tau}, \Delta\tau_{N_\tau}) \mathcal{U}_{\mathrm{PITE}}^{[N_\tau-1]} \widetilde{Q}_{N_\tau-1}^{m_{N_\tau-1}}$$

Furthermore, parameters of the imaginary-time evolution operator exp(-HΔτ) in the N_τ step are denoted as γ_{N_τ} and Δτ_{N_τ}. A right side in Equation 27 is represented as in Equation 28 when U_PITE^[N_τ-1] is expanded.

[Equation 28]

$$\mathcal{U}_{\mathrm{PITE}}^{[N_\tau]} = \left[\prod_{i=N_\tau}^{1} \mathcal{C}_{\mathrm{PITE}}^{(1)}\left(\gamma_i, \Delta\tau_i\right)\right] \left(U_{\mathrm{ref}} \otimes I_2\right) \left[\prod_{i=1}^{N_\tau-1} \widetilde{Q}_i^{m_i}\right]$$

Here, Π_{i=N_τ}^{1}C_PITE^(1)(γ_i, Δτ_i)=C_PITE^(1)(γ_{N_τ}, Δτ_{N_τ})...C_PITE^(1)(γ_1,Δτ_1), Π_{i=1}^{N_τ-1}Q~_i^{m_i} = Q~_{N_τ-1}^{m_{N_τ-1}}...Q~_{1}^{m_{1}}.

Π_{i=N_τ}^{1}C_PITE^{(1)}(γ_i, Δτ_i) is represented as in Equation 29 when N_τ is odd, and as in Equation 30 when N_τ is even.

[Equation 29]

$$\prod_{i=N_\tau}^{1} \mathcal{C}_{\mathrm{PITE}}^{(1)}(\theta_i, s_i\Delta\tau_i) = \mathcal{C}_{\mathrm{PITE}}^{(1)}\left(\sum_{i=1}^{N_\tau}(-1)^{i+1}\theta_i, \sum_{i=1}^{N_\tau}(-1)^{i+1}s_i\Delta\tau_i\right)$$

[Equation 30]

$$\prod_{i=N_\tau}^{1} \mathcal{C}_{\mathrm{PITE}}^{(1)}(\theta_i, s_i\Delta\tau_i) = \mathcal{C}_{\mathrm{two}}^{(1)}\left(\theta_{N_\tau}, \sum_{i=1}^{N_\tau-1}(-1)^{i+1}\theta_i, s_{N_\tau}\Delta\tau_{N_\tau}, \sum_{i=1}^{N_\tau-1}(-1)^{i+1}s_i\Delta\tau_i\right)$$

In other words, when N_τ is odd, Π_{i=N_τ}^{1}C_PITE^{(1)}(γ_i, Δτ_i) can be implemented by an equivalent quantum circuit within the first order of Δτ(e.g., the quantum circuit 5 shown in FIG. 10). The parameters of the quantum circuit (e.g., θ_0) may be different. In particular, when N_τ=1, Equation 28 coincides with the right side in Equation 21. When N_τ is even, an operator shown in Equation 30 can be implemented as a quantum circuit using C_two^(1) with a number of operations equivalent to a quantum circuit (the quantum circuit 5) within the first order of Δτ.

A pre-amplitude amplification operator Q~_{N_τ} is represented as in Equation 31. FIG. 17 shows an example of a quantum circuit that implements the pre-amplitude amplification operator Q~_{N _r} in the N_τ step. The quantum circuit is an example of the second quantum circuit CQ.

[Equation 31]

$$\widetilde{Q}_{N_\tau} = S_0 \left[ \prod_{i=1}^{N_\tau - 1} \widetilde{Q}_i^{m_i} \right]^\dagger \left( U_{\mathrm{ref}}^\dagger \otimes I_2 \right) \widetilde{\mathcal{D}}^{(1)}(\boldsymbol{\theta}, \boldsymbol{s}, \boldsymbol{\Delta\tau}) \left( U_{\mathrm{ref}} \otimes I_2 \right) \left[ \prod_{i=1}^{N_\tau - 1} \widetilde{Q}_i^{m_i} \right]$$

Here, D~^{(1)}(θ, s, Δτ) in Equation 31 is defined as in Equation 32.

[Equation 32]

$$\begin{cases} \mathcal{D}^{(1)} \left( \sum_{i=1}^{N_\tau - 1} (-1)^{i+1} \theta_i, \sum_{i=1}^{N_\tau - 1} (-1)^{i+1} s_i \Delta\tau_i \right) & \text{for } N_\tau \text{ odd} \\ \mathcal{D}_{\mathrm{two}}^{(1)} \left( \theta_{N_\tau - 1}, \sum_{i=1}^{N_\tau - 2} (-1)^{i+1} \theta_i, s_{N_\tau - 1} \Delta\tau_{N_\tau - 1}, \sum_{i=1}^{N_\tau - 2} (-1)^{i+1} s_i \Delta\tau_i \right) & \text{for } N_\tau \text{ even} \end{cases}$$

D^(1) is defined by Equation 33. The quantum circuit in Equation 33 is equivalent to the quantum circuit in FIG. 13 obtained by removing the zero reflection S_0, the reference circuit U_ref, and complex conjugates thereof.

[Equation 33]

$$\mathcal{D}^{(1)}(\gamma, \Delta\tau) \equiv -\mathcal{C}_{\mathrm{PITE}}^{(1)\dagger}(\gamma, \Delta\tau) S_\chi \mathcal{C}_{\mathrm{PITE}}^{(1)}(\gamma, \Delta\tau)$$

D_two^(1) is defined by Equation 34. FIG. 18 shows an example of a quantum circuit implementing D_two^(1).

[Equation 34]

$$\mathcal{D}_{\mathrm{two}}^{(1)}(\gamma_2, \gamma_1, \Delta\tau_2, \Delta\tau_1) \equiv -\mathcal{C}_{\mathrm{two}}^{(1)\dagger}(\gamma_2, \gamma_1, \Delta\tau_2, \Delta\tau_1) S_\chi \mathcal{C}_{\mathrm{two}}^{(1)}(\gamma_2, \gamma_1, \Delta\tau_2, \Delta\tau_1)$$

The pre-amplitude amplification operator Q~_{N_τ} in N_τ r step configures of pre-amplitude amplification operators Q~_{1}, ..., Q~_{N_τ-1} in 1 to N_τ-1 step. Therefore, the number of operations in the quantum circuit implementing the pre-amplitude amplification operator increases with power. On the other hand, the success probability of obtaining the state in which the imaginary-time evolution operator exp(-HΔτ) acts increases monotonically. Therefore, when the imaginary-time evolution method and the quantum amplitude amplification method are used together, it is desirable to employ the imaginary-time evolution method and the quantum amplitude amplification method together for two or three steps at the beginning of the imaginary-time step.

6.3 Information processing flow

FIG. 19 is a flowchart showing an example of an information processing flow when the imaginary-time evolution method and the quantum amplitude amplification method are applied together. In this section, with reference to FIG. 19, an information processing flow when the above-described imaginary-time evolution method and the quantum amplitude amplification method are used together will be described. Specifically, information processing is executed based on a pre-amplitude amplification operator that is advantageous in terms of the number of operations performed by the quantum circuit. Note that the information processing may include any exception processing that is not illustrated in the flowchart. Exception processing includes interruption of the information processing and omission of each processing. Selection or input performed in the information processing may be based on user operation or may be performed automatically without user operation. Each operation described below may be executed directly by the quantum circuit generation apparatus 1, or may be executed by the quantum circuit generation apparatus 1 by sending a signal for the operation to another component (e.g., a quantum computer not shown in the drawings).

[Step S301]

First, in step S301, the controller 13 performs an initial value setting. Specifically, the controller 13 performs processing of setting |0...0> state to all qubits 160 including the ancillary bits, similarly to step S101. As a result, an initial state of an arbitrary qubit is set. At this time, the counter K is set to 1 for loop processing described below. The number of steps N may be set directly by a user or by a classical computer based on information obtained. Alternatively, an iteration condition for the loop processing may be set as a condition such as energy difference from the previous step.

In initialization processing, the controller 13 receives setting of a non-unitary operator based on an operator. The setting may be performed by a user, by a device included in the quantum circuit generation apparatus 1, or by a device other than the quantum circuit generation apparatus 1. For convenience of explanation, the operator is assumed to be the Hamiltonian H, which is a Hermitian operator, and the non-Hermitian operator is assumed to be exp(-HΔτ) with the Hamiltonian H as the generator, but is not limited thereto.

[Step S302]

Next, in step S302, the controller 13 executes first circuit generation processing. Therefore, the circuit generation unit 134 generates the quantum circuit C_PITE and the reference circuit U_ref, then generates the quantum circuit U_PITE based thereon.

As an example of the first circuit generation processing, the conversion unit 133 first converts the imaginary-time evolution operator exp (-Hτ) as a non-unitary operator into a unitary operation (e.g., real-time evolution operator exp (is_{1}HΔτ) and exp (-is_{1}HΔτ)) by using the ancillary bit. These unitary operations are converted into quantum operations that can be executed by quantum computation in the circuit generation unit 134. Based on the converted unitary operator, the circuit generation unit 134 generates quantum circuit C_PITE (specifically, the quantum circuit 3, the quantum circuit 4, the quantum circuit 5, etc.) representing the imaginary-time evolution step using a few ancillary bits.

Further, the circuit generation unit 134 also generates the reference circuit U_ref. As a result, a desired N+1 qubit system state to be input to the quantum circuit C_PITE is generated. The reference circuit U_ref is set appropriately according to the desired N+1 qubit system state. For instance, when k=1, the reference circuit U_ref may be any quantum circuit for generating an arbitrary quantum state. When k> 1, preferably a state in which the k-1 times imaginary-time evolution operator exp(-HΔτ) acted on in the previous step may preferably be the quantum circuit used to obtain the separable state (e.g., the quantum circuit 9-1, the quantum circuit 9-2, ... a quantum circuit 9-{k-1} as shown in FIG. 16).

The circuit generation unit 134 in the present embodiment generates a quantum circuit U_PITE based on the generated reference circuit U_ref and the quantum circuit C_PITE, which functions as an imaginary-time evolution operator.

[Step S303]

Next, the processing proceeds to step S303, where the circuit generation unit 134 generates a pre-amplitude amplification circuit (e.g., the quantum circuit 7, the quantum circuit 8, etc.) corresponding to the pre-amplitude amplification operator Q~ based on the generated quantum circuit C_PITE. Specifically, the circuit generation unit 124 generates a pre-amplitude amplification circuit (e.g., quantum circuits 7, 8, etc.) that implements the pre-amplitude amplification operator Q~ based on the quantum circuit C_PITE and the reference circuit U_ref. The pre-amplitude amplification operator Q~ may be implemented by a quantum circuit converted to have fewer control time evolution operators than the amplitude amplification operator Q. The processing in step S303 is an example of a pre-amplitude amplification circuit generation step. That is, in the pre-amplitude amplification circuit generation step, a pre-amplitude amplification quantum circuit corresponding to the pre-amplitude amplification operator Q~ is generated based on the generated quantum circuit.

[Step S304]

Then, the processing proceeds to step S304, where the controller 13 determines the amplification frequency m based on the predetermined proportionality constant corresponding to the time evolution calculation unit. The amplification frequency m is the number of times the generated pre-amplitude amplification circuit is repeatedly activated when performing the pre-amplitude amplification described below. The controller 13 may determine the amplification frequency m further based on an existence probability of a state of N qubits on which the time evolution calculation unit is acted. In the present embodiment, the controller 13 determines the amplification frequency m based on the parameter $\gamma$ corresponding to the existence probability of the state of the qubit. The processing in step S304 is an example of the amplification frequency determination step.

Here, an example of determination method of the amplification frequency m will be described.

First, the calculation unit 135 computes the success probability as described in Section 6.2.1. The computation of the success probability may be executed by estimation based on two or more measurements of ancillary bits or may be executed using quantum amplitude estimation. The quantum amplitude estimation may be performed using quantum Fourier transform disclosed in non-patent document 1, or may be performed using quantum amplitude estimation with maximum likelihood estimation. In other words, a specific manner of estimating the success probability is arbitrary. The calculation unit 135 then computes the parameter $\theta$_a based on the estimated success probability.

Next, based on the computed success probability, the calculation unit 135 determines the parameter $\gamma$ and the amplification frequency m, in such a manner that the ratio of the coefficient of the qubit state when the ancillary bit is observed as a different state from the predetermined state to the coefficient of the qubit state when the ancillary bit is observed as the predetermined state is equal to or greater than a predetermined allowable value. Although the allowable value may be set arbitrarily, in the present embodiment, the allowable value is set to be approximately 1. In other words, the calculation unit 135 searches for a set of the parameter and the amplification frequency m in such a manner that almost no |$\Psi$_bad> is included. In the present embodiment, as described above, the calculation unit 135 searches for a set of parameters (m, $\gamma$, n) satisfying Equation 23 in a possible range of parameters $\gamma$($0<\gamma<1$ and $\gamma\neq 1/\sqrt{2}$), and determines the parameter $\gamma$ in such a manner that m becomes minimum.

Such an optimal parameter $\gamma$ is preferably determined in such a manner that a single iteration of the pre-amplitude amplification operator Q~ results in an observation probability of 1 for a desired state in the ancillary bit. The circuit generation unit 134 may again generate the quantum circuit C_PITE and the pre-amplitude amplification circuit Q~ based on the parameter $\gamma$ determined in this manner.

[Step S305]

Next, the processing proceeds to step S305, where the calculation unit 135 executes quantum amplification. In the present embodiment, the calculation unit 135 executes operation on the N+1 qubit system configuring of N qubits and one ancillary bit based on the generated pre-amplitude amplification circuit. Specifically, the calculation unit 135 repeats the operation based on the generated pre-amplitude amplification circuit for the N+1 qubit system for the amplification frequency m.

[Step S306]

Then, the processing proceeds to step S306, where the calculation unit 135 executes the quantum imaginary-time evolution for the N+1 qubit system. In the present embodiment, the calculation unit 135 executes operation on the N+1 qubit system based on the generated quantum circuit U_PITE. That is, the calculation unit 135 allows the generated quantum circuit U_PITE to act after allowing the generated pre-amplitude amplification quantum circuit to act. As a result, the state of the N qubit system is changed by the unitary gate in the quantum circuit U_PITE in such a manner that the state of the N qubit system evolves probabilistically in imaginary-time. The result of such a quantum computation may be an entanglement state between a state in which the quantum imaginary-time evolution acts on a reference state and other states.

In the present embodiment, since the operation based on the pre-amplitude amplification circuit is executed for the above-mentioned amplification frequency m, the |$\Psi$_good> state, which is almost separable from the |$\Psi$_bad> state, is output from the quantum circuit U_PITE. Therefore, in the present embodiment, the calculation unit 135 does not measure the ancillary bit for the qubit and the ancillary bit on which the pre-amplitude amplification operator is applied, at least before the operation based on the generated quantum circuit U_PITE is executed. Therefore, the circuit generation unit 134 generates the second quantum circuit CQ configured to allow the generated quantum circuit to act without measuring the ancillary bit. The pre-amplitude amplification circuit is configured to finally allow the zero reflection S_0 as the reflection operator to act. Therefore, through step S305 and step S306, the calculation unit 135 allows the generated quantum circuit U_PITE to act after the reflection operator has been computed.

Note that the imaginary-time evolution processing described above is merely an example and is not limited thereto. For example, the imaginary-time evolution processing may be executed in combination with the processing in step S 102 as appropriate.

[Step S307, step S308]

Next, the processing proceeds to step S307, where the calculation unit 135 determines whether a value of counter k is N for the number of loops. If the value of counter k is determined to be less than N, the processing unit proceeds to step S308, and the controller 13 increments the value of counter k by 1 and returns to step S302. In other words, the processing from step S302 to step S306 should be repeated for a loop count of N. In the present embodiment, although the quantum circuit generation apparatus 1 is exemplified as a classical computer, the processing may be carried out with either a classical computer or a quantum computer without any significant difference.

[Step S309]

On the other hand, if it is determined that the value of counter k is N, the processing proceeds to step S309, where the calculation unit 135 executes processing of obtaining at least one of the eigenvalues and eigenvectors. A specific manner of the processing may be the same as in step S 105. Thereafter, the controller 13 terminates the information processing. More specifically, after N times of quantum imaginary-time evolution, the calculation unit 135 functions as an execution unit to obtain one or both of the eigenvalues and eigenvectors.

Regarding the quantum circuit combining quantum imaginary-time evolution and amplitude amplification, it is not necessary to execute through all imaginary-time steps. For example, for an integer N_1 satisfying 0<=N_1<=N, a k<N_1 step may be executed by a quantum circuit that combine imaginary-time evolution and amplitude amplification, and in subsequent processing, only a quantum circuit that implement quantum imaginary-time evolution may be executed.

6.4 Example

In this section, an example of a result of the information processing described in this chapter will be illustrated.

A CX gate is a two-qubit gate operation, and the number of operations is characterized primarily by the CX gate because gate operation time and error rate are larger than for single-qubit gate operation. Note that in the present example, the two-qubit gate operation is implemented as a quantum circuit using only the CX gate. In the present example, an all-coupling Ising Hamiltonian H is treated as the operator L. The quantum circuit 5 shown in FIG. 10 is employed as the quantum circuit for the imaginary-time evolution operator $\exp(-H\Delta\tau)$.

FIG. 20 shows the number of CX gates required in the quantum circuit for the amplitude amplification operator Q and the number of CX gates required in the quantum circuit for the pre-amplitude amplification operator Q~, as the number of qubits N varies. The number of CX gates in the quantum circuit for the imaginary-time evolution operator $\exp(-H\Delta\tau)$ is indicated by C_ITE in FIG. 20. Further, the zero reflection S_0 is implemented on the quantum circuit by a method using one ancillary bit. The number of CX gates required in this case increases on a linear order with the number of qubits N. A relationship between the number of CX gates and the number of qubits N is shown as S_0 in FIG. 20. The number of CX gates required in the quantum circuit for the amplitude amplification operator is indicated by C_Q in FIG. 20. The number of CX gates required for the quantum circuit implementing the pre-amplitude amplification operator is denoted as C_Q~ in FIG. 20. As clarified with reference to FIG. 20, the number of operations can be reduced by using the pre-amplitude amplification operator Q~ instead of the amplitude amplification operator Q when performing quantum amplification.

Here, a maximum number of cuts for a maximum cut problem is determined using a method that combines the imaginary-time evolution method and the quantum amplitude amplification method. As an example, an unweighted graph configuring of edges {(0, 1), (1, 2), (2, 3), (3, 0)} is applied. The maximum cut problem can be transformed into an Ising Hamiltonian.

A result obtained when the imaginary-time evolution computation was executed on a quantum computer according to the information processing shown in FIG. 19 is simulated on a classical computer. As a result, results shown in FIGS. 21 to 23 are obtained.

FIG. 21 shows a simulation result of the success probability (w QAA in FIG. 21) at each imaginary-time step in the example. FIG. 22 shows a simulation result of a total success probability (w QAA in FIG. 22) in the example. FIG. 23 shows a simulation result of a fidelity (w QAA in FIG. 23) at each imaginary-time step in the example. For comparison, results for $\gamma$=0.4 (w/o QAA $\gamma$=0.4) and$\gamma$=0.8 (w/o QAA $\gamma$=0.8) when quantum amplitude amplification is not used in combination are shown in FIGS. 21 to 23.

In a result without combining the quantum amplitude amplification, it can be confirmed that the success probability increases monotonically with increasing imaginary-time evolution steps, but does not reach 1. On the other hand, when the quantum amplitude amplification is used, the success probability is approximately 1, and the total success probability is approximately 1 as well. A fact that the total success probability is monotonically decreasing in the results without quantum amplification suggests that the above information processing is useful.

The fidelity is a square of an absolute value of an inner product of the ground state vector and the state vector at each step. It can be confirmed that the ground state is obtained both with and without the quantum amplification (w/o QAA $\gamma$=0.4, w/o QAA $\gamma$=0.8 in FIG. 23).

7. Another example of information processing

In this chapter, another example of each information processing method described in Chapter 4 and Chapter 6 will be explained, supplemented by the aforementioned quantum mechanical theory of functional composition. The information processing method described in this chapter may be regarded as another example of the method for generating a quantum circuit that executes the quantum imaginary-time evolution described in Chapter 4. In following explanation, as before, an operator, a quantum circuit corresponding to the operator, and a quantum operation corresponding to the operator may be denoted by the same member number. In addition, subscripts representing integers, e.g., m, n, etc., may be the same symbol or different values.

7.1 Imaginary-time evolution by linear combination of real-time evolution operator

The imaginary-time evolution operator with the general Hermitian operator H as the generator is represented as a linear combination of the real-time evolution operator exp(i$\alpha$_{k}$\tau$H) with the Hermitian operator H as the generator. A relational expression in this case is shown in Equation 35.

[Equation 35]

$$m_0 e^{-\tau\mathcal{H}} = m_0 \sum_{k=0}^{\infty} c_k e^{i\alpha_k \tau\mathcal{H}}$$

In this chapter, known time step is denoted as $\tau$, real constants are denoted as m_0 and $\alpha$_k, and an unknown coefficient of a linear combination is denoted as c_k. However, k is a subscript representing an integer.

In the present embodiment, from a practical point of view, expansion by linear combination is truncated so as to coincide with a K-1 order of the imaginary-time evolution operator with respect to time step $\tau$. A relational expression for this case is shown in Equation 36.

[Equation 36]

$$m_0 e^{-\tau\mathcal{H}} = m_0 \sum_{k=0}^{K-1} c_k e^{i\alpha_k \tau\mathcal{H}} + \mathcal{O}(\tau^K)$$

The imaginary-time evolution operator on a left side in Equation 36 is executed with Taylor expansion with respect to $\tau$. Similarly, the Taylor expansion of the time evolution operator on a right side in Equation 36 is executed with respect to $\tau$. The conversion unit 133 determines a coefficients c_k of the linear combination in such a manner that coefficients of each Taylor expansion on both sides match. This is converted to finding a solution of the linear equation represented as in Equation 37. Here, c={c_0, c_1, ..., c_K-1}.

[Equation 37]

$$A\mathbf{c} = \mathbf{b}$$

A component k of vector b is represented as in Equation 38.

[Equation 38]

$$b_k = (-1)^k$$

A matrix A is represented as in Equation 39. Here, Equation 39 is known as Van der Monde's matrix, which is proven to have an inverse matrix. In other words, this linear equation can always be solved.

[Equation 39]

$$A = \begin{pmatrix} 1 & 1 & \cdots & 1 \\ (i\alpha_0) & (i\alpha_1) & \cdots & (i\alpha_{K-1}) \\ (i\alpha_0)^2 & (i\alpha_1)^2 & \cdots & (i\alpha_{K-1})^2 \\ \vdots & \vdots & \ddots & \vdots \\ (i\alpha_0)^{K-1} & (i\alpha_1)^{K-1} & \cdots & (i\alpha_{K-1})^{K-1} \end{pmatrix}$$

In other words, when each of K real-time evolution operators and the imaginary-time evolution operator are converted into a linear combination of a basis in linear space of K-th order with respect to a time step, the conversion unit 133 performs comparison between a coefficient of the basis with respect to the imaginary-time evolution operator and a coefficient of the basis with respect to a linear combination of the real-time evolution operator. Then, the conversion unit 133 converts the imaginary-time evolution operator into a unitary gate corresponding to the linear combination of a plurality of different real-time evolution operators based on a result of the comparison.

The order K required to achieve accuracy ε is represented as in Equation 40.

[Equation 40]

$$K = O\left(\frac{\log(N_\tau/\varepsilon)}{\log\log(N_\tau/\varepsilon)}\right)$$

N_τ is a number of times the quantum imaginary-time evolution of time step τ is repeated, i.e., the number of steps in total imaginary-time evolution. From this, it can be seen that the order K required to achieve high accuracy ε increases logarithmically. Further, the order K also increases logarithmically with the number of steps N_τ of imaginary-time evolution. In other words, the order K may achieve exponential acceleration with respect to the accuracy ε or the number of time steps N_τ.

7.2 Quantum circuit for linear combination of real-time evolution operators

As mentioned above, it has been shown that an imaginary time evolution operator can be represented within the K-1th order of time step τ by linear combination of K real-time evolution operators. In this section, a quantum circuit for implementing imaginary-time evolution operator within the K-1th order of time step τ will be described. A known method may be used for the operator configured of a linear combination of two or more unitaries.

The quantum circuit for linear combination of unitary operators implements the linear combination of unitary operators in a probabilistic manner using ancillary bits. The number of ancillary bits required is n a=log_{2}K. Here, since n_a is an integer, a decimal point of log_{2}K is rounded up.

FIG. 24 shows an example of a quantum circuit QC1 for computing a linear combination of two unitary operators U0 and U1 for an N qubit system. The quantum circuit QC 1 specifies operations on N qubits TQ and one ancillary bit AQ0. Here, a state of the N qubit system is denoted as |ψ> state, and a state of an ancillary bit AQ0 is denoted as |q_{0}^A>. Further, as shown in FIG. 25, an initial state of |q_{0}^A> is |0>.

The quantum circuit QC1 is configured to first calculate a Hadamard gate H on the ancillary bit AQ0. The quantum circuit QC1 is then configured to calculate either the unitary operation U0 or the unitary operation U1 depending on a state of the ancillary bit AQ. Specifically, the quantum circuit QC1 is configured to perform a control bit operation using the ancillary bit AQ0 as a control bit and the qubit TQ as a target bit. In the present embodiment, a control gate operation in such a manner that a unitary operation U0 is performed on the qubit TQ when the ancillary bit AQ0 is in the |0> state, and a control gate operation in such a manner that a unitary operation U1 is performed on the qubit TQ when the ancillary bit AQ0 is in the |1> state are included. The quantum circuit QC1 is then configured to compute a R_y rotation gate. Then, the quantum circuit QC1 is configured to measure a state of the ancillary bit AQ0. For convenience of explanation, a series of operations in the quantum circuit QC1 from the control bit operation to before measurement is denoted as C^{(1)}.

With such a configuration, the |ψ> state of the N qubit system input to the quantum circuit QC1 transitions as in Equation 41.

[Equation 41]

$$|0\rangle \otimes |\psi\rangle \xrightarrow{H} \frac{|0\rangle + |1\rangle}{\sqrt{2}} \otimes |\psi\rangle$$

$$\xrightarrow{C-U_0,\ C-U_1} \frac{1}{\sqrt{2}}\Big(|0\rangle \otimes U_0|\psi\rangle + |1\rangle \otimes U_1|\psi\rangle\Big)$$

$$\xrightarrow{R_y} \frac{1}{\sqrt{2}}\Big[|0\rangle \otimes \big(\cos\theta U_0 + \sin\theta U_1\big)|\psi\rangle + |1\rangle \otimes \big(-\sin\theta U_0 + \cos\theta U_1\big)|\psi\rangle\Big]$$

Here, if a state of the ancillary bit after the R_y rotational gate operation is observed to be |0>, the state |ψ> of the N qubit system becomes a state in which the linear combination of the two unitary operations U0, U1 is computed for the state |ψ>. Thereby, by appropriately determining the parameter θ, it becomes possible to implement an addition of two unitary operations U0 and U1 as a quantum circuit.

The quantum circuit QC1 for implementing the linear combination of the above two unitary operations U0 and U1 can be implemented as a linear combination of more than two unitary operations U0 and U1 by increasing the number of ancillary bits. FIG. 25 shows an example of a quantum circuit QCn that is a generalization of the quantum circuit QC1 for a linear combination of unitary operators.

The quantum circuit QCn specifies operation on an N+n qubit system, configuring of N qubits TQ and n ancillary bits AQ0~AQn-1. Specifically, the quantum circuit QCn is configured in such a manner that the Hadamard gate H acts on the ancillary bits AQ0~AQn-2 and the R_y gate acts on the ancillary bits AQn-1. A rotation angle of the R_y gate is set to 2θ_{pre}. The quantum circuit QCn is then configured to perform an operation C^{(n)} including a control gate operation on the qubit TQ. When n=1, the operation C^{(n)} is equivalent to an operation C^{(1)} in FIG. 24. The quantum circuit QCn is then configured to measure the ancillary bits AQ0~AQn-1.

The quantum circuit QCn (in particular, the above operation C^{(n)}) can be obtained recursively from the quantum circuit QC1 by setting the state configuring of the qubit TQ and the ancillary bits AQ0~AQn-2 as the |ψ> state in the quantum circuit QC1 and setting the state configuring of the ancillary bit AQn-1 as the state of AQ0 in the quantum circuit QC1, and using C^{(n-1)} as the unitary operations U0 and U1. That is, the quantum circuit QCn is configured in such a manner that, unlike other ancillary bits AQ0~AQn-2, no control gate operation is performed on the ancillary bit AQn-1, using the other qubits or ancillary bits as control bits. Hereinafter, for convenience of explanation, at least in the quantum circuit QCn for performing linear combination of unitary operations, the ancillary bit AQn-1, which is a target bit from other qubits and which is not subjected to control gate operation, may be referred to as the most significant ancillary bit AQn-1.

Here, the quantum circuit QCn shown in FIG. 25 differs from the quantum circuit QC1 shown in FIG. 24 in that the operation acting on the most significant ancillary bit AQn-1 is an R_y rotation gate rather than the Hadamard gate H. This allows the absolute values of the coefficients of each unitary operation to be determined as shown in Equation 41. The R_y rotation gate is applied to adjust a coefficient m_0 in Equation 35, and a cost of amplitude amplification can be minimized by adjusting the coefficient m_0. Details thereof will be described later.

Here is an example of a method for determining the parameter θ^{(n)} that defines the operation C^{(n)J.

A rotation angle θ_re of the R_y rotation gate and the parameter θ^{(n)} have a relationship shown in Equation 42.

[Equation 42]

$$\begin{cases} \cos\theta_{\text{pre}}\cos\theta^{(n)} = \dfrac{c_{00\cdots 0}}{\cos\theta_0^{(n-1)}\cdots\cos\theta_{00\cdots 0}^{(1)}} \equiv y_0 \\ \sin\theta_{\text{pre}}\sin\theta^{(n)} = \dfrac{c_{11\cdots 1}}{\sin\theta_1^{(n-1)}\cdots\sin\theta_{11\cdots 1}^{(1)}} \equiv y_1. \end{cases}$$

As a result, two rotation angles θ_pre and θ^{(n)} may be obtained. Here, absolute values of coefficients of the linear combination of unitary operators are represented as c_00...0 to c_11...1.

For existence of θ_pre and θ^{(n)} that satisfy Equation 42, the coefficient m_0 must satisfy an inequality condition represented in Equation 43.

[Equation 43]

$$m_0 \leq \frac{1}{\max|y_0 \pm y_1|}$$

Based on these relationships, the parameter θ^{(n)} is determined along with the rotation angle θ_pre of the R_y gate introduced to adjust the coefficient m_0. Thus, since the introduction of the R_y gate sets a constraint condition by θ_pre, the calculation unit 135 can determine the absolute value of the parameter θ^{(n)} based on the relationships in Equation 42 and Equation 43 shown above.

7.3 Quantum circuit for equivalent imaginary-time evolution operator within a second order of time step τ

Next, a specific example of a method for generating a quantum circuit for equivalent imaginary-time evolution operator within the second order of time step τ will be described.

A linear combination of real-time evolution operators for the case within the second order of τ is represented as in Equation 44.

[Equation 44]

$$m_0\left(2I_{2^n} + \frac{1}{\sqrt{2}}e^{i3\pi/4}e^{i\tau\mathcal{H}} + \frac{1}{\sqrt{2}}e^{i5\pi/4}e^{-i\tau\mathcal{H}}\right) + \mathcal{O}(\tau^3)$$

As shown in Equation 44, the equivalent imaginary-time evolution operator within the second order of τ is represented as a linear combination of three unitary operators I_{2^n}, exp(iτH), and exp(-iτH). Therefore, the number of ancillary bits required to implement the operator shown in Equation 44 as a quantum circuit is two.

FIG. 26 shows an example of a quantum circuit QCτ2 for equivalent imaginary-time evolution operators within the second order of τ. In FIG. 26, a state of ancillary bit AQ0 is denoted as |q_1^A=0> and a state of ancillary bit AQ1 is denoted as |q_2^A=0>. Here, an initial state of the ancillary bit AQ0 and the ancillary bit AQ2 is provided as |0> state. A linear combination of the real-time evolution operators is implemented by the control time evolution operator with the ancillary bit AQ0 and the ancillary bit AQ1 as control bits and the qubit TQ as target bit with the |ψ> state as input state. Since the identity operator does not require circuit implementation, two control-time evolution operators U_{RTE}(τ) and U_{RTE}(τ)^† are shown in FIG. 26.

Specifically, the quantum circuit QCτ2 is configured to first allow the Hadamard operation H to act on the ancillary bit AQ0, and to allow the R_y rotational gate operation to act on the most significant ancillary bit AQ1. The quantum circuit QCτ2 is then configured to allow two control time evolution operators U_{RTE}(τ) and U_{RTE}(τ)^† to act on the qubit |ψ>, depending on states of the two ancillary bits AQ0 and AQ1. Specifically, the quantum circuit QCi2 is configured to allow the real-time evolution operator U_{RTE}(τ) to act on the qubit TQ when the states of the ancillary bits AQ0 and AQ1 are both |0>, and to allow the real-time evolution operator U_{RTE} (τ)^†to act when the state of ancillary bit AQ0 is |0> and the state of ancillary bit AQ1 is |1>. The quantum circuit QCτ2 is then configured to sequentially allow the Q gate and the R_y rotation gate to act on the ancillary bit AQ0 if the state thereof is |0>. Then, the quantum circuit QCτ2 is configured to sequentially allow a P gate and the R_y rotational gate to act on the ancillary bit AQ1. The quantum circuit QCi2 is then configured to measure the ancillary bit AQ0 and the ancillary bit AQ1.

The P gate in FIG. 26 is a phase gate. The Q gate is configured of two phase gates and is represented as in

Equation 45.

[Equation 45]

$$Q(\phi_0, \phi_1) \equiv e^{i\phi_0}|0\rangle\langle 0| + e^{i\phi_1}|1\rangle\langle 1|$$

Parameters in FIG. 26 are φ_00=3π/4, φ_01=5π/4, φ_10=0, and θ^(1)_0=π/4. θ^(2) and θ_pre are represented as in Equation 46. These parameters realize coefficients of unitary operators in Equation 44 (exp(-i3π/4) and exp(i5π/4) in the case of Equation 44).

[Equation 46]

$$\theta_{\text{pre}} = \frac{\arccos(-\sqrt{2}m_0) + \arccos(3\sqrt{2}m_0)}{2}$$
$$\theta^{(2)} = \frac{\arccos(-\sqrt{2}m_0) - \arccos(3\sqrt{2}m_0)}{2}$$

7.4 Combination of quantum circuit and quantum amplitude amplification for linear combination of real-time evolution operators

The linear combination of unitary gates described above is performed probabilistically. To increase a probability that a desired computation is performed, existing quantum amplitude amplification may be used together.

An example of such a quantum circuit is a quantum circuit QCA1 as shown in FIG. 27, for example. FIG. 27 shows an example of the quantum circuit QCA1 when the equivalent imaginary-time evolution computation and the quantum amplitude amplification are used together within the higher order of τ. In the quantum amplitude amplification, an operation of reversing a sign of the state orthogonal to the state to be amplified (oracle S_χ) and a reflection operation with respect to the initial state are performed repeatedly. As mentioned above, the reflection operation on the initial state involves a unitary gate (in the present embodiment, a circuit for linear combination of unitary operators and the reference circuit U_ref) and the zero reflection S_0 to generate the initial state. The reference circuit U_ref is a quantum circuit for constructing the initial state |ψ> from the |0...0> state, which allows the quantum imaginary-time evolution to act, as described above. The oracle S_χ in the present embodiment is a sign-reversed version of the zero reflection S_0, which acts only on the ancillary bits AQ0~AQn-1.

Without employing the quantum amplitude amplification, the probability of obtaining a desired state (in other words, the success probability), P_0, is represented as in Equation 47.

[Equation 47]

$$\mathbb{P}_0 = m_0^2 \langle\psi|e^{-2\mathcal{H}\tau}|\psi\rangle + \mathcal{O}(\tau^K)$$

Furthermore, Equation 47 can also be represented as Equation 48 using an arbitrary angle θ_a.

[Equation 48]

$$\mathbb{P}_0 = \sin^2\theta_a$$

On the other hand, if the quantum amplitude amplification is applied, the probability of obtaining the desired state, P_0, is represented as in Equation 49.

[Equation 49]

$$\mathbb{P}_0 = \sin^2(2m+1)\theta_a$$

m is a number of quantum amplitude amplification iterations (i.e., amplification frequency). As mentioned above, an optimal number of iterations of the quantum amplitude amplification (the amplification frequency m) can be obtained from Equation 49 in such a manner that P_0 = 1 after 0_a is estimated from the quantum amplitude estimation. However, the optimal number of repetitions at this time cannot be set freely, and the number of iterations may become large. m_0 can be set freely via θ_pre within a range satisfying an inequality condition in Equation 42, therefore the controller 13 may adjust m_0 in such a manner that the optimal number of repetitions m is minimum. This may be achieved by adopting a set of parameters (m, m_0, n) that satisfies Equation 50, where m is the minimum. Here, n is an arbitrary non-negative integer.

[Equation 50]

$$m_0 = \frac{1}{\alpha}\sin\left(\frac{(2n+1)\pi}{4m+2}\right)$$

α is represented as in Equation 51.

[Equation 51]

$$\alpha^2 \equiv \langle\psi|e^{-2\mathcal{H}\Delta\tau}|\psi\rangle$$

7.5 Another example of information processing flow

In this section, an information processing flow in a higher order imaginary-time evolution method as described above will be illustrated. FIG. 28 is a flowchart for the equivalent imaginary-time evolution computation within a higher order of τ. Note that the information processing may include any exception processing that is not illustrated in the flowchart. Exception processing includes interruption of the information processing and omission of each processing. Selection or input performed in the information processing may be based on user operation or may be performed automatically without user operation. Each operation described below may be executed directly by the quantum circuit generation apparatus 1, or may be executed by the quantum circuit generation apparatus 1 by sending a signal for the operation to another component (e.g., a quantum computer not shown in the drawings).

[Step S401]

First, in step S401, the controller 13 performs an initial value setting. Specifically, the controller 13 performs processing of setting a |0...0> state to all qubits 160 including the ancillary bits, similarly to step S101. As a result, an initial state of an arbitrary qubit is set. At this time, the counter K is set to 1 for loop processing described below. The number of steps N may be set directly by a user or by a classical computer based on information obtained. Alternatively, an iteration condition for the loop processing may be set as a condition such as energy difference from the previous step.

[Step S402]

Next, the processing proceeds to step S402, where the controller 13 sets parameters necessary to determine a real-time evolution operator exp(iα_{k}τH) for expanding an imaginary-time evolution operator exp(-Hr), including time step τ and order K (step S401). The order K may be set by a user or based on a required accuracy ε. The accuracy ε may be set by the user or based on nature of an operator being acquired. Acquisition of the information is executed, for instance, in the initialization processing of step S401. The controller 13 then sets at least one real-time evolution operator exp(iα_{k}τH) based on the above parameters such as the set time step τ and the order K. A value of α_{k} may be preset according to the order K.

[Step S403]

Next, the processing unit proceeds to step S403, where the controller 13 determines a coefficients c_k of the real-time evolution operator exp(iθ_{k}τH). The controller 13 then converts the imaginary-time evolution operator exp(-τH) with the operator H as the generator into a linear combination of the real-time evolution operators exp (iα_{k}τH), as shown in Equation 36.

Specifically, the controller 13 solves the above linear equation to construct an accurate quantum imaginary-time evolution at least within a K-th order of time step $\tau$. The conversion unit 133 then determines a coefficient of a linear combination of the real-time evolution operator. The conversion unit 133 then determines the circuit parameters of the quantum circuit for the linear combination of unitary operators so as to reproduce these coefficients. Thus, the conversion unit 133 converts the imaginary-time evolution operator exp(-H$\tau$) in the operator H into a unitary gate (e.g., quantum circuit QCn) corresponding to the linear combination of several different real-time evolution operators exp(i$\alpha$_{k}$\tau$H). To solve such a linear equation, a classical computer, a quantum computer, or a combination thereof may be applied.

[Step S404]

Next, the processing proceeds to step S404, where the controller 13 executes circuit generation processing based on the linear combination of the converted real-time evolution operator exp(i$\alpha$_{k}$\tau$H). As a result, the linear combination of the real-time evolution operator exp(i$\alpha$_{k}$\tau$H) obtained in step S403 generates a quantum circuit for quantum imaginary-time evolution (e.g., the quantum circuit QCn shown in FIG. 25). In this case, the calculation unit 135 employs the quantum circuit for acquiring a result of computation in the previous step as the reference circuit U_ref. In a k=1 step, the reference circuit U_ref specified by a user or the quantum circuit that produces a superposition state of equal weight ratio is applied as the reference circuit U_ref.

[Step S405]

Next, the processing proceeds to step S405 to generate a quantum circuit (e.g., the quantum circuit QCA1) for quantum amplification based on the generated quantum circuit QCn. For instance, the algorithm described above is employed to generate the quantum circuit.

[Step S406]

Next, the processing unit proceeds to step S406, where the controller 13 determines the amplification frequency m. The amplification frequency m can be determined, for example, in the same manner as in step S304 described above.

[Step S407]

Next, the processing proceeds to step S407, where the calculation unit 135 performs quantum imaginary-time evolution. Specifically, the calculation unit 135 computes the generated quantum operation specified by the quantum circuit QCn for quantum imaginary-time evolution on the qubit TQ and the ancillary bits AQ0~AQn-1.

[Step S408]

Next, the processing proceeds to step S408, where the calculation unit 135 performs quantum amplification. Specifically, the calculation unit 135 repeats the quantum operation, which is based by the generated quantum circuit QCA1 for quantum amplitude amplification, for the amplification frequency m, and calculates on the qubit TQ and the ancillary bits AQ0~AQn-1.

[Step S409]

Next, the processing proceeds to step S409, where the calculation unit 135 determines whether the value of counter k is N for the number of loops. If the value of counter k is determined to be less than N, the processing proceeds to step S410, and the controller 13 increments the value of counter k by 1 and returns to step S404. In other words, the processing from step S404 to step S408 shall be repeated for a loop count of N. In the present embodiment, although the quantum circuit generation apparatus 1 is exemplified as a classical computer, the processing may be carried out with either a classical computer or a quantum computer without any significant difference.

[Step S411]

On the other hand, if it is determined that the value of counter k is N, the processing proceeds to step S411, where the calculation unit 135 executes processing of obtaining at least one of the eigenvalue and the eigenvector. A specific manner of the processing may be the same as in step S105 or step S309. Thereafter, the controller 13 terminates the present information processing. More specifically, after executing the quantum imaginary-time evolution N times, the calculation unit 135 functions as an execution unit to obtain one or both of the eigenvalue and the eigenvector.

The operation specified by the quantum circuitry that combines quantum imaginary-time evolution and amplitude amplification need not be performed throughout all the imaginary-time steps. In other words, the quantum circuit that combines quantum imaginary-time evolution and amplitude amplification may be different for each imaginary-time step. For instance, for an integer N_1 satisfying 0<=N_1 <=N, in k<N_1 step, the operation may be performed by the quantum circuit that combines imaginary-time evolution and amplitude amplification, and in subsequent operations, only the quantum circuit QCn implementing quantum imaginary-time evolution may be performed.

In the information processing in this chapter, correct imaginary-time evolution is realized within the K-1th order of time step $\tau$ by the linear combination of several real-time evolution operators. The coefficients of the linear combination are obtained by solving the linear equation. A term number of the real-time evolution operator required in this case is referred to as K. The linear combination of the real-time evolution operator is implemented in a quantum circuit using log_{2}K ancillary bits. When the ancillary bits are observed as the desired state, a more accurate imaginary-time evolution is realized within the K-1th order.

7.6 Example

This section describes an example of the above information processing including step S401 through step S411. In this example, a maximum number of cuts in a maximum cut problem is obtained using equivalent imaginary-time evolutions within the higher order of $\tau$. As an example, an unweighted graph configuring of edges {(0, 1), (1, 2), (2, 3), (3, 0)} are applied. The maximum cut problem can be transformed into an Ising Hamiltonian.

FIG. 29 shows a simulation result of fidelity of equivalent imaginary-time evolution computation within the higher order of $\tau$ in the present example. A vertical axis in FIG. 29 represents fidelity and a horizontal axis represents the number of imaginary-time steps. The imaginary-time step width is set to $\tau$=0.5. The Hadamard gate is used instead of R_y (28_pre) shown in FIG. 25. The real-time evolution operator is computed for cases of term number K=3, 5, and 7. As a comparative example, an exact quantum imaginary-time evolution is shown as Exact ITE.

Results for the cases of term number K=3, 5, and 7 correspond to the results of exact imaginary-time evolution within the second order, fourth order, and sixth order of $\tau$, respectively. The present simulation result suggests that the larger K, the closer to exact imaginary-time evolution is.

8. Others

With respect to the quantum circuit generation apparatus 1 of the above-described embodiment, following aspects may be adopted.

The operator L may be a non-Hermitian operator. In this case, $\alpha$ may be defined using, for example, Equation 52 instead of Equation 24.

[Equation 52]

$$\alpha^2 = \left|\exp\left(-L\Delta\tau\right)|\psi>\right|^2$$

This allows $\alpha$ to be interpreted as a probabilistic parameter for an arbitrary operator L.

The quantum circuit generation apparatus 1 does not need to perform quantum operation based on various quantum circuits generated by the information processing. For instance, the quantum circuit generation apparatus 1 may only generate various quantum circuits by the information processing.

An aspect of the embodiment is not limited to the quantum circuit generation apparatus 1, but may also be an information processing method itself, or a program that allows a computer to execute each step of the information processing method.

In performing the above information processing, a user may input information desired by the user via the input unit 15, and the reception unit 131 may accept the information. Further, the output unit 132 may output various computation results and display the results on the display unit 14.

In addition, the present invention may be provided in each of the following aspects.

(1) An information processing method, comprising each step including: a conversion step of converting an operator for N qubits into a unitary gate using less than (n/2) ancillary bits, the unitary gate having a form that can implement the operator directly; and a circuit generation step of generating, based on the unitary gate, a quantum circuit that functions as a time evolution operator when the ancillary bit is observed as a predetermined state.

(2) The information processing method according to (1), wherein: the conversion step is a step of converting the operator so as to have a form using only the time evolution operator and a unitary operator, the time evolution operator including a Hermitian operator.

(3) The information processing method according to (1) or (2), wherein: the conversion step is a step of converting the operator so as to have a form using only a unitary operator and a real-time evolution operator different from the time evolution operator, the real-time evolution operator including a unitary operator.

(4) The information processing method according to any one of (1) to (3), wherein: the time evolution operator is configured to be generated by a Hermitian operator.

(5) The information processing method according to any one of (1) to (4), further comprising: a calculation step of executing a quantum computation using the quantum circuit.

(6) The information processing method according to (5), wherein: the calculation step is a step of allowing a classical computer to calculate a parameter defining the quantum circuit only for a first time when the quantum circuit is used iteratively.

(7) The information processing method according to (5) or (6), wherein: the calculation step is a step of acquiring, when acquiring an eigenvector of a matrix or an operator that corresponds to an eigenvalue with a smallest real part, the eigenvector as a qubit state.

(8) The information processing method according to any one of (5) to (7), wherein: the calculation step is a step of acquiring an eigenvector of a given linear operator as a qubit state, and subsequently calculating an eigenvalue based on quantum calculation with the eigenvector of the qubit state as input, thereby converting a problem of finding the eigenvector into a problem of determining kernel of a matrix.

(9) The information processing method according to any one of (5) to (8), wherein: the calculation step includes a loop processing of updating a configuration of the quantum circuit according to each result of the time evolution operators when solving an eigenvalue problem of a linear operator including self-consistent field problem using the time evolution operator.

(10) The information processing method according to any one of (1) to (9), wherein: the quantum circuit further includes a quantum amplification circuit enhancing a probability of the ancillary bit being observed as the predetermined state.

(11) The information processing method according to any one of (1) to (10), further comprising: a pre-amplitude amplification circuit generation step of generating a pre-amplitude amplification circuit corresponding to a pre-amplitude amplification operator based on the quantum circuit having been generated, wherein the pre-amplitude amplification operator is a unitary operator increasing a probability amplitude of the ancillary bit being the predetermined state by acting on the qubit and the ancillary bit, and includes at least the time evolution operator corresponding to the operator; and an amplification step of allowing the generated quantum circuit to act after allowing the generated pre-amplitude amplification circuit to act.

According to such a configuration, by having the pre-amplitude amplification operator act on the qubit and the ancillary bit, an observation probability of observing that the ancillary bit is in a predetermined state, i.e., a probability amplitude, is increased. Here, by having the pre-amplitude amplification operator act before the quantum circuit that functions as a time evolution operator, the number of operations required to amplify the amplitude can be reduced compared to the conventional quantum amplification method.

(12) The information processing method according to (11), wherein: when a state of the qubit is a specific state, the pre-amplitude amplification operator includes at least a reflection operator that allows a sign of the specific state to invert, and the amplification step is a step of allowing the generated quantum circuit to act after the reflection operator is acted.

(13) The information processing method according to (11) or (12), further comprising: an amplification frequency determination step of determining amplification frequency that the pre-amplitude amplification circuit is allowed to repeatedly act, based on a predetermined proportionality constant corresponding to the time evolution operator.

According to such a configuration, the probability of observing that the ancillary bit is in a predetermined state tends to increase and decrease repeatedly as the amplification frequency increases. Therefore, there may be two or more times of amplification for which the probability falls within a predetermined allowable range. Thus, by determining the amplification frequency by the pre-amplitude amplification circuit based on the predetermined proportionality constant corresponding to the time evolution operator, the probability can be increased with a relatively small number of operations.

(14) The information processing method according to (13), wherein: the amplification frequency determination step is a step of determining the amplification frequency further based on an existence probability of the specific state of the N qubits on which the time evolution operator is acted.

(15) The information processing method according to any one of (11) to (14), wherein: the circuit generation step is a step of generating a second quantum circuit configured to further allow the generated quantum circuit to act with respect to the quantum bit and the ancillary bit on which the pre-amplitude amplification operator is acted, without measuring the ancillary bit.

According to such a configuration, by increasing the probability of observing that the ancillary bit is in a predetermined state, the probability of observing the state of the N qubits as a state corresponding to the state of the ancillary bit increases. This brings the state of the N qubits closer to the state when the state of the ancillary bit is projected to an eigenstate by measuring the ancillary bit. The state in which the quantum circuit acts on such a state without measuring the ancillary bit approaches the state in which the quantum circuit acts on the state after the ancillary bits are observed to be in a predetermined state. Therefore, the increase in the number of operations when repeatedly calculating the quantum circuit can be suppressed.

(16) The information processing method according to (15), wherein: the circuit generation step is a step of generating the second quantum circuit when a ratio of a first coefficient and a second coefficient is equal to or greater than a predetermined tolerance value, the first coefficient being a coefficient of the state of the qubit when the ancillary bit is observed as a state different from the predetermined state, and the second coefficient being a coefficient of the state of the qubit when the ancillary bit is observed as the predetermined state.

According to such a configuration, the state of the N qubits after the pre-amplitude amplification circuit is activated can be brought close to the state after observing that the ancillary bit is in a predetermined state.

(17) The information processing method according to any one of (1) to (16), wherein: the conversion step is a step of converting an imaginary-time evolution operator included in the operator into the unitary gate corresponding to a linear combination of two or more different real-time evolution operators.

According to such a configuration, a higher order component of the imaginary-time evolution operator can be represented by a plurality of different real-time evolution operators. Therefore, compared to the case where the imaginary-time evolution operator is implemented as a unitary gate corresponding to a single real-time evolution operator, the computation accuracy of the quantum circuit functioning as the imaginary-time evolution operator can be improved.

(18) The information processing method according to (17), wherein: the conversion step is a step of comparing a coefficient of a basis regarding the imaginary-time evolution operator and a coefficient of a basis regarding the real-time evolution operator, when each of K real-time evolution operators and the imaginary-time evolution operator are converted into a linear combination of the basis in a K-th order with respect to a time step, and converting the operator to the unitary gate corresponding to a linear combination of two or more different real-time evolution operators based on a result of the comparison.

According to such a configuration, the implementation of the imaginary-time evolution operator as a unitary gate can be attributed to solving an existing linear equation problem.

(19) A quantum circuit generator apparatus, comprising: a controller configured to execute each step of the information processing method according to any one of (1) to (18).

(20) A program that allows a computer to execute each step of the information processing method according to any one of (1) to (18).

Of course, the present invention is not limited thereto.

Finally, although various embodiments of the present invention have been described, these are presented as examples and are not intended to limit the scope of the present invention. Other novel embodiments may be implemented in various forms, and various omissions, substitutions, and modification may be made within the scope of invention without departing from the spirit of the present invention. The embodiments or modifications thereof are included in the scope and spirit of the present invention, as well as within the scope of the invention and equivalents thereof recited in the claims.

REFERENCE SIGNS LIST

1: Quantum circuit generation apparatus
10: Communication bus
11: Communication unit
12: Storage unit
13: Controller
131: Reception unit
132: Output unit
133: Conversion unit
134: Circuit generation unit
135: Calculation unit
14: Display unit

15: Input unit
2: Quantum circuit
21: Ancillary bit
211: Observation unit
22: Ancillary bit
221: Observation unit
23: Input bit
3: Quantum circuit
31: Ancillary bit
311: Observation unit
33: Input bit
4: Quantum circuit
5: Quantum circuit
6: Quantum circuit
7: Quantum circuit
8: Quantum circuit
9: Quantum circuit
9-1: Quantum circuit
9-2: Quantum circuit
124: Circuit generation unit
AQ0~AQn-1: Ancillary bit
CQ: Second quantum circuit
C_PITE: Quantum circuit
Q: Quantum amplitude amplification operator
Q~: Pre-amplitude amplification circuit
Q~_{N_τ}: Pre-amplitude amplification circuit
QC1: Quantum circuit
QCA1: Quantum circuit
QCn: Quantum circuit
QCτ2: Quantum circuit
R_z: Rotation gate calculation
S_0: Zero reflection
S_χ: Oracle
TQ: Qubit
U0: Unitary operation
U1: Unitary operation
U_PITE: Quantum circuit
U_ref: Reference circuit

## Claims

**1.** An information processing method, comprising each step including:

a conversion step of converting an operator for N qubits into a unitary gate using less than (n/2) ancillary bits, the unitary gate having a form that can implement the operator directly; and
a circuit generation step of generating, based on the unitary gate, a quantum circuit that functions as a time evolution operator when the ancillary bit is observed as a predetermined state.

**2.** The information processing method according to claim 1, wherein:
the conversion step is a step of converting the operator so as to have a form using only the time evolution operator and a unitary operator, the time evolution operator including a Hermitian operator.

**3.** The information processing method according to claim 1 or 2, wherein:
the conversion step is a step of converting the operator so as to have a form using only a unitary operator and a real-time evolution operator different from the time evolution operator, the real-time evolution operator including a unitary operator.

**4.** The information processing method according to any one of claims 1 to 3, wherein: the time evolution operator is configured to be generated by a Hermitian operator.

**5.** The information processing method according to any one of claims 1 to 4, further comprising: a calculation step of executing a quantum computation using the quantum circuit.

**6.** The information processing method according to claim 5, wherein: the calculation step is a step of allowing a classical computer to calculate a parameter defining the quantum circuit only for a first time when the quantum circuit is used iteratively.

**7.** The information processing method according to claim 5 or 6, wherein: the calculation step is a step of acquiring, when acquiring an eigenvector of a matrix or an operator that corresponds to an eigenvalue with a smallest real part, the eigenvector as a qubit state.

**8.** The information processing method according to any one of claims 5 to 7, wherein: the calculation step is a step of

acquiring an eigenvector of a given linear operator as a qubit state, and
subsequently calculating an eigenvalue based on quantum calculation with the eigenvector of the qubit state as input, thereby converting a problem of finding the eigenvector into a problem of determining kernel of a matrix.

**9.** The information processing method according to any one of claims 5 to 8, wherein: the calculation step includes a loop processing of updating a configuration of the quantum circuit according to each result of the time evolution operators when solving an eigenvalue problem of a linear operator including self-consistent field problem using the time evolution operator.

**10.** The information processing method according to any one of claims 1 to 9, wherein: the quantum circuit further includes a quantum amplification circuit enhancing a probability of the ancillary bit being observed as the predetermined state.

**11.** The information processing method according to any one of claims 1 to 10, further comprising:

a pre-amplitude amplification circuit generation step of generating a pre-amplitude amplification circuit corresponding to a pre-amplitude amplification operator based on the quantum circuit having been generated, wherein the pre-amplitude amplification operator is a unitary operator increasing a probability amplitude of the ancillary bit being the predetermined state by acting on the qubit and the ancillary bit, and includes at least the time evolution operator corresponding to the operator; and
an amplification step of allowing the generated quantum circuit to act after allowing the generated pre-amplitude amplification circuit to act.

**12.** The information processing method according to claim 11, wherein:

when a state of the qubit is a specific state, the pre-amplitude amplification operator includes at least a reflection operator that allows a sign of the specific state to invert, and
the amplification step is a step of allowing the generated quantum circuit to act after the reflection operator is acted.

**13.** The information processing method according to claim 11 or 12, further comprising: an amplification frequency determination step of determining amplification frequency that the pre-amplitude amplification circuit is allowed to repeatedly act, based on a predetermined proportionality constant corresponding to the time evolution operator.

**14.** The information processing method according to claim 13, wherein: the amplification frequency determination step is a step of determining the amplification frequency further based on an existence probability of the specific state of the N qubits on which the time evolution operator is acted.

**15.** The information processing method according to any one of claims 11 to 14, wherein: the circuit generation step is a step of generating a second quantum circuit configured to further allow the generated quantum circuit to act with respect to the quantum bit and the ancillary bit on which the pre-amplitude amplification operator is acted, without measuring the ancillary bit.

**16.** The information processing method according to claim 15, wherein:
the circuit generation step is a step of generating the second quantum circuit when a ratio of a first coefficient and a second coefficient is equal to or greater than a predetermined tolerance value,

the first coefficient being a coefficient of the state of the qubit when the ancillary bit is observed as a state different from the predetermined state, and
the second coefficient being a coefficient of the state of the qubit when the ancillary bit is observed as the predetermined state.

**17.** The information processing method according to any one of claims 1 to 16, wherein:
the conversion step is a step of converting an imaginary-time evolution operator included in the operator into the unitary gate corresponding to a linear combination of two or more different real-time evolution operators.

**18.** The information processing method according to claim 17, wherein:
the conversion step is a step of

comparing a coefficient of a basis regarding the imaginary-time evolution operator and a coefficient of a basis regarding the real-time evolution operator, when each of K real-time evolution operators and the imaginary-time evolution operator are converted into a linear combination of the basis in a K-th order with respect to a time step, and
converting the operator to the unitary gate corresponding to a linear combination of two or more different real-time evolution operators based on a result of the comparison.

**19.** A quantum circuit generator apparatus, comprising:
a controller configured to execute each step of the information processing method according to any one of claims 1 to 18.

**20.** A program that allows a computer to execute each step of the information processing method according to any one of claims 1 to 18.

FIG. 1

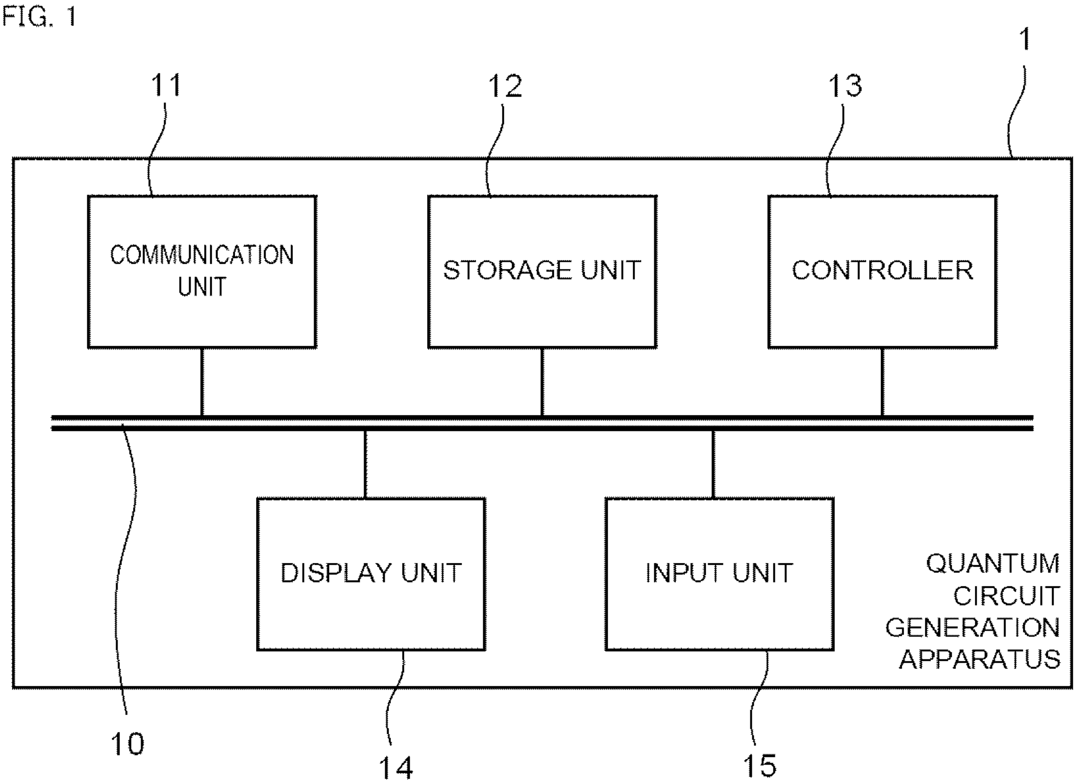
1
11
12
13
COMMUNICATION UNIT
STORAGE UNIT
CONTROLLER
DISPLAY UNIT
INPUT UNIT
QUANTUM CIRCUIT GENERATION APPARATUS
10
14
15

FIG. 2

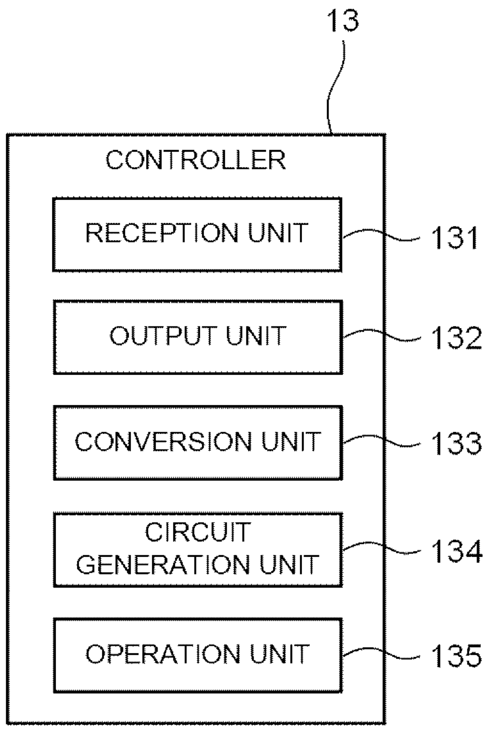
13
CONTROLLER
RECEPTION UNIT
131
OUTPUT UNIT
132
CONVERSION UNIT
133
CIRCUIT
GENERATION UNIT
134
OPERATION UNIT
135

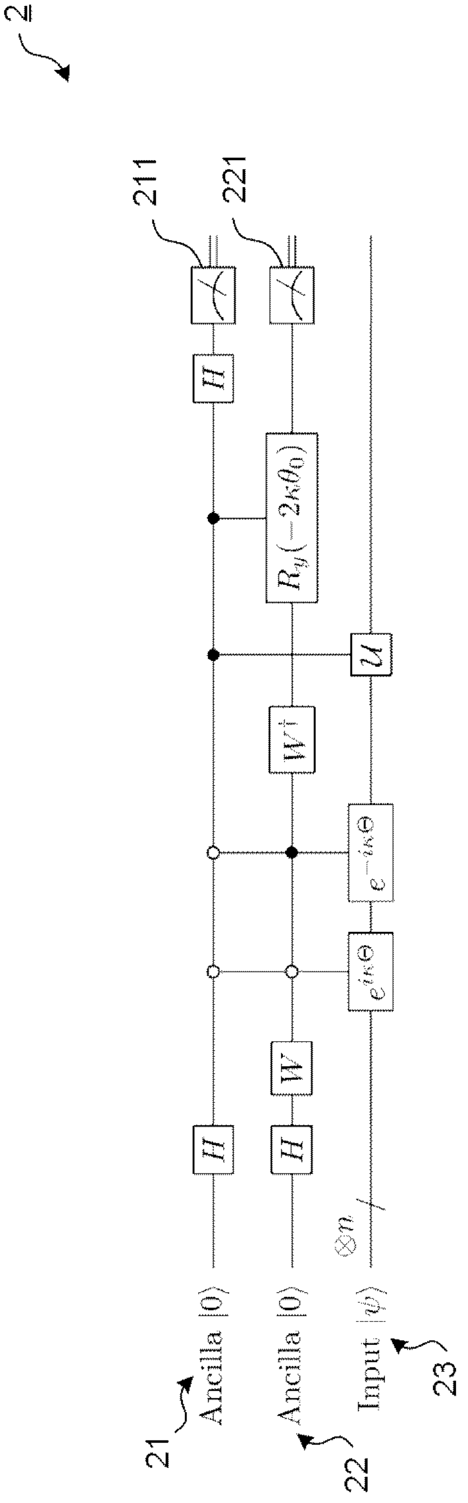
2
211
221
Ancilla |0⟩
Ancilla |0⟩
Input |ψ⟩
⊗n
H
H
W
W†
U
H
R_y(−2κθ_0)
e^{iκΘ}
e^{−iκΘ}
21
22
23

FIG. 3

FIG. 4

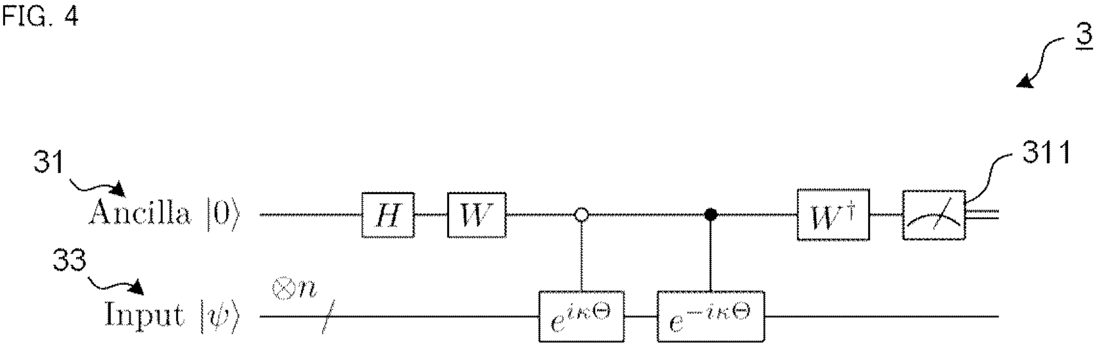

FIG. 5

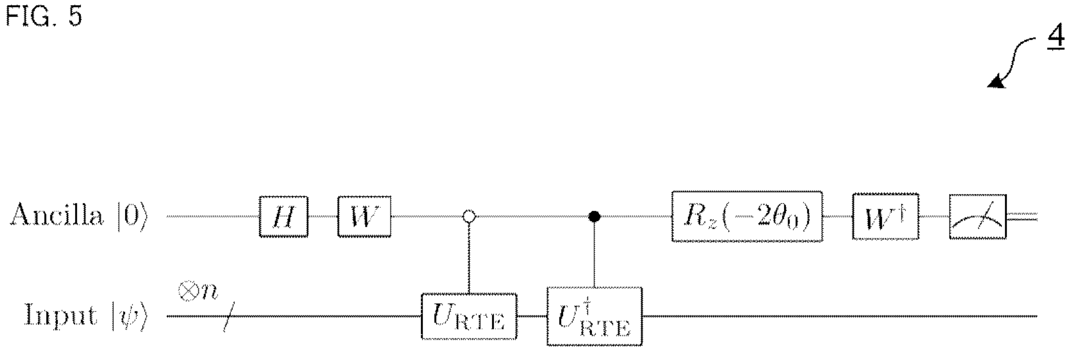

FIG. 6

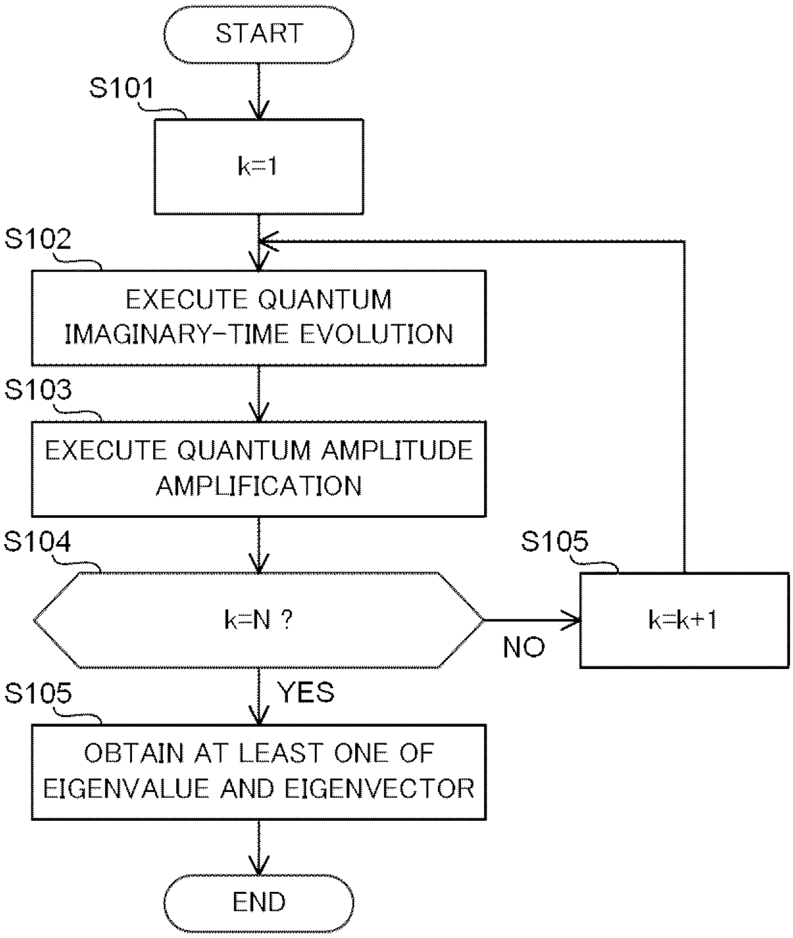
START
S101
k=1
S102
EXECUTE QUANTUM IMAGINARY-TIME EVOLUTION
S103
EXECUTE QUANTUM AMPLITUDE AMPLIFICATION
S104
k=N ?
NO
S105
k=k+1
YES
S105
OBTAIN AT LEAST ONE OF EIGENVALUE AND EIGENVECTOR
END

FIG. 7

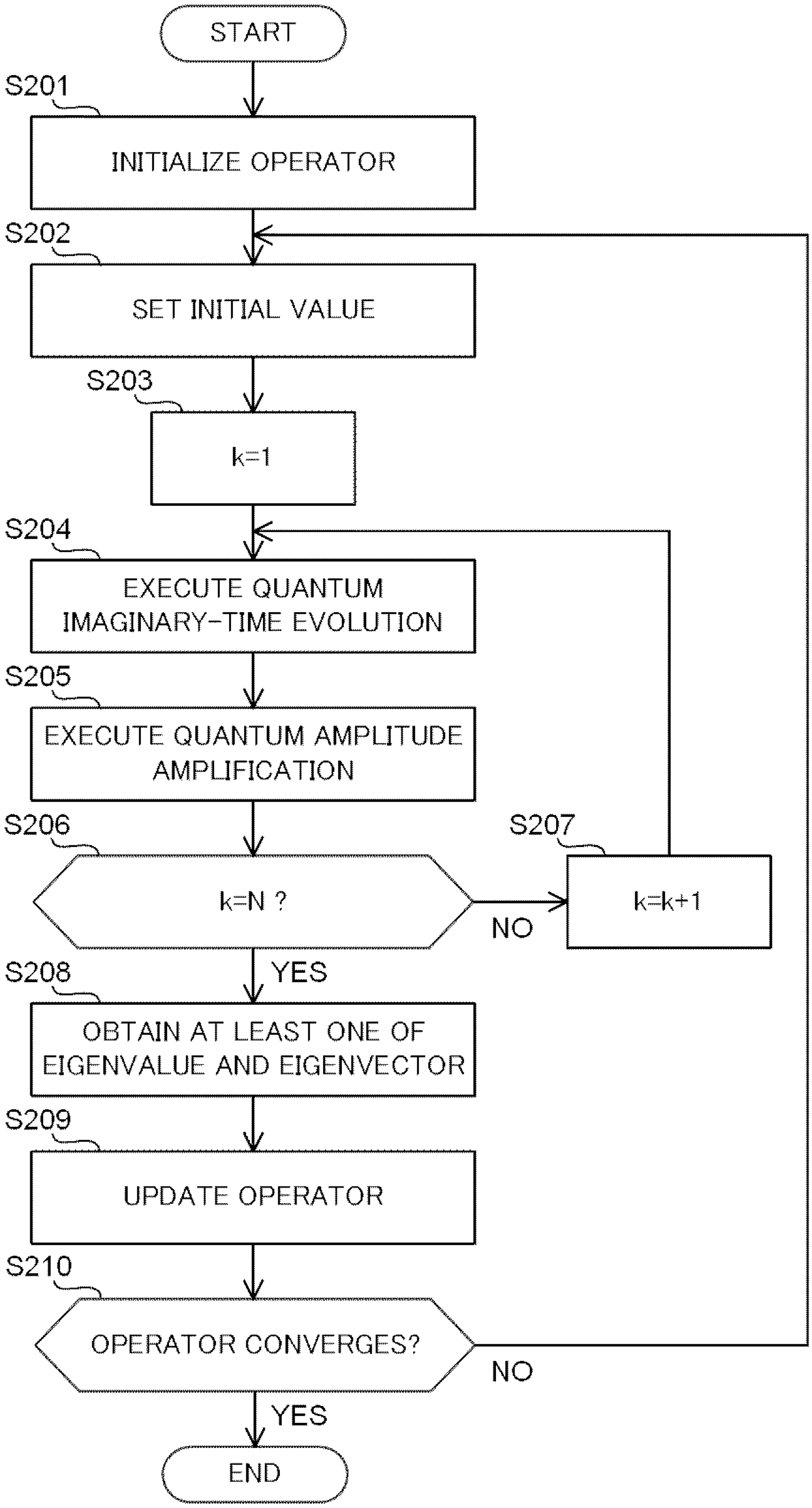
START
S201
INITIALIZE OPERATOR
S202
SET INITIAL VALUE
S203
k=1
S204
EXECUTE QUANTUM IMAGINARY-TIME EVOLUTION
S205
EXECUTE QUANTUM AMPLITUDE AMPLIFICATION
S206
k=N ?
NO
S207
k=k+1
YES
S208
OBTAIN AT LEAST ONE OF EIGENVALUE AND EIGENVECTOR
S209
UPDATE OPERATOR
S210
OPERATOR CONVERGES?
NO
YES
END

FIG. 8

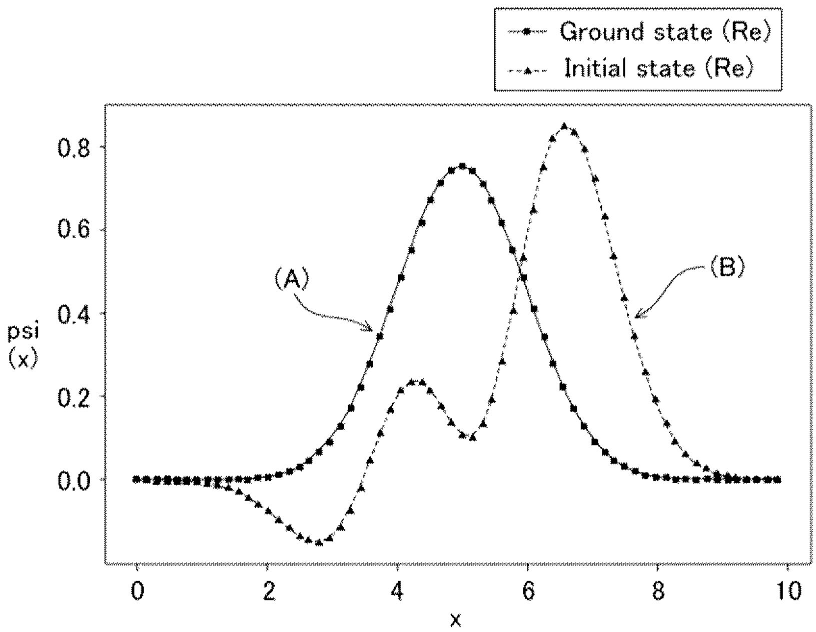
Ground state (Re)
Initial state (Re)
0.8
0.6
0.4
0.2
0.0
psi
(x)
(A)
(B)
0
2
4
6
8
10
x

FIG. 9

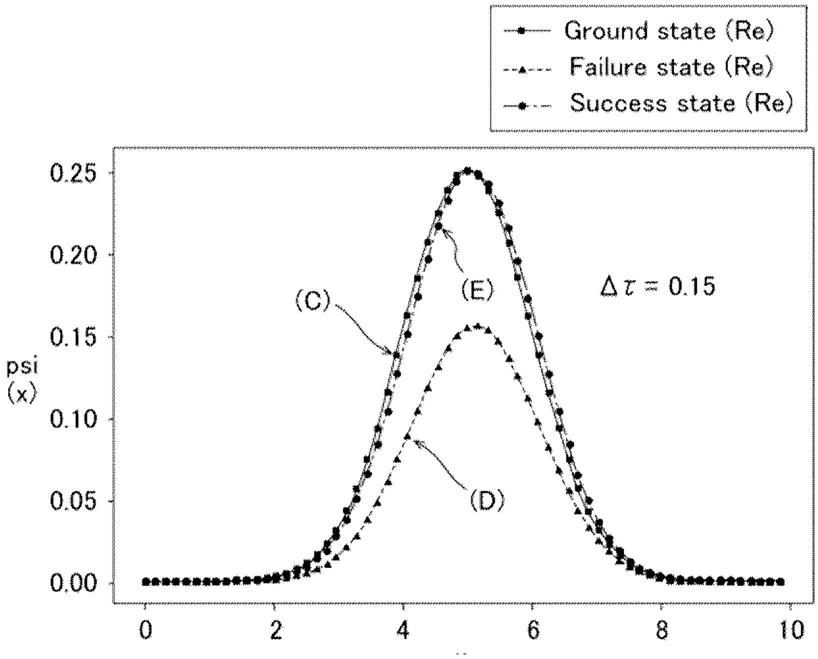
Ground state (Re)
Failure state (Re)
Success state (Re)
0.25
0.20
0.15
0.10
0.05
0.00
psi
(x)
(C)
(E)
(D)
Δτ = 0.15
0
2
4
6
8
10

FIG. 10

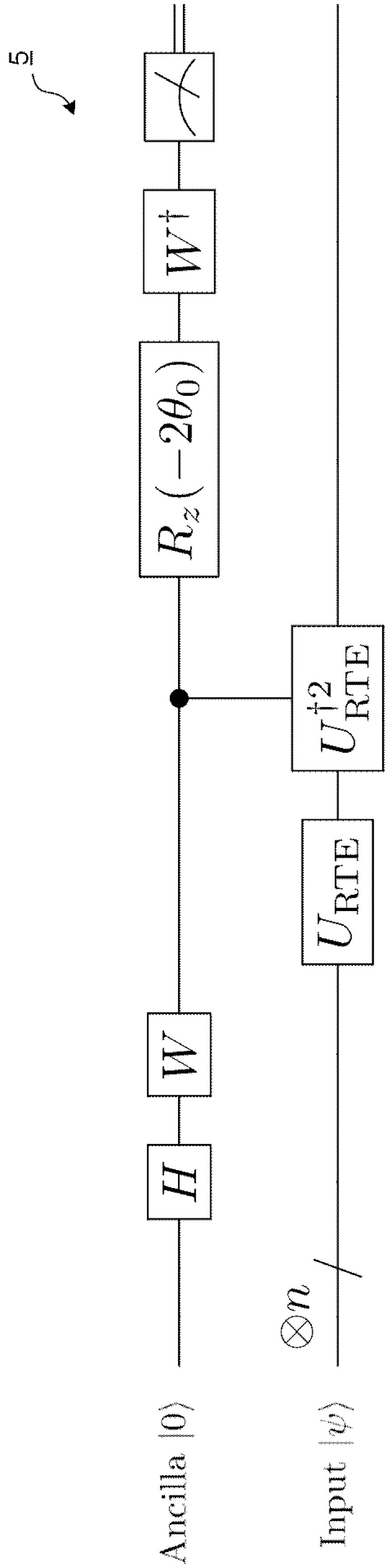
5
Ancilla $|0\rangle$
Input $|\psi\rangle$
$\otimes n$
$H$
$W$
$U_{\mathrm{RTE}}$
$U^{\dagger 2}_{\mathrm{RTE}}$
$R_z(-2\theta_0)$
$W^{\dagger}$

FIG. 11

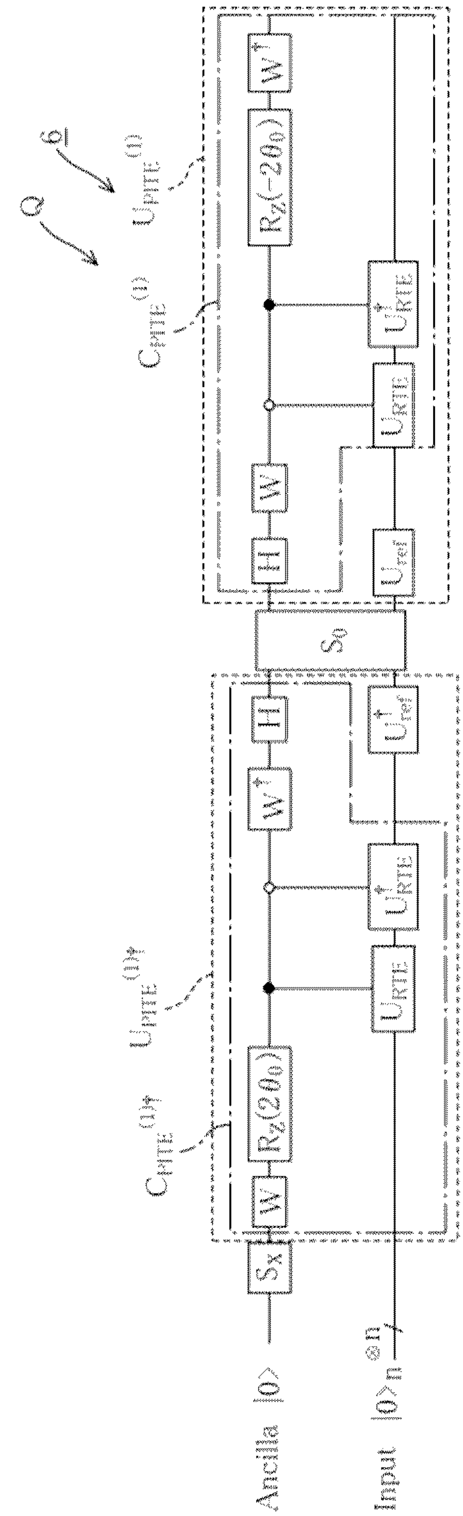

FIG. 12

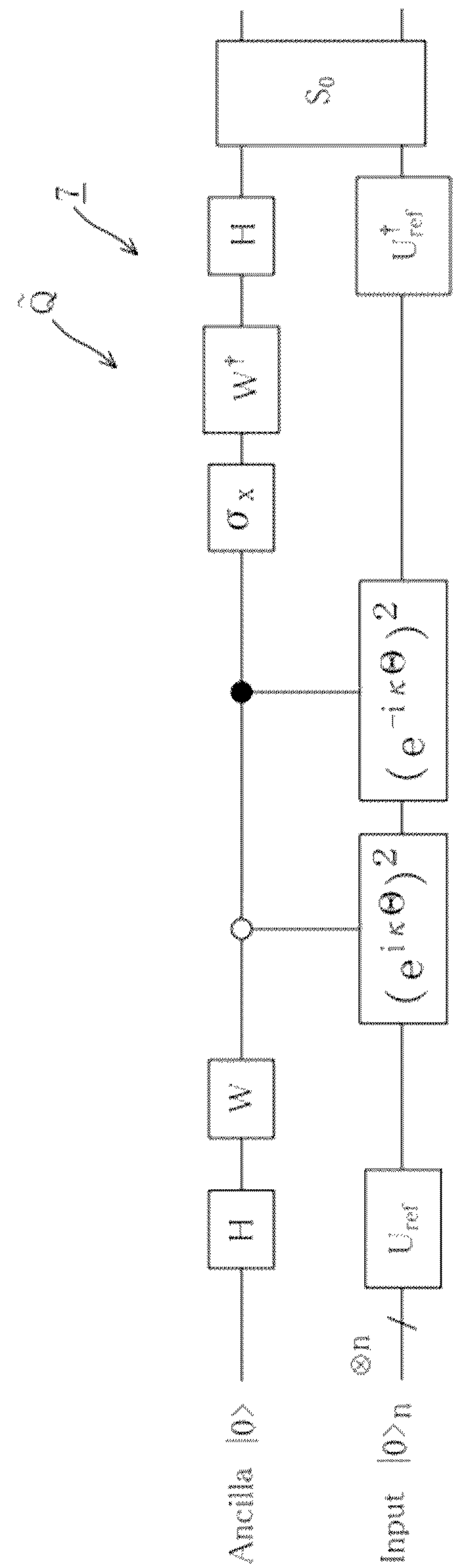

Ancilla |0⟩
Input |0⟩n
⊗n
H
W
$(e^{i\kappa\Theta})^2$
$(e^{-i\kappa\Theta})^2$
$\sigma_x$
$W^\dagger$
H
$U_{ref}$
$U_{ref}^\dagger$
$S_0$
$\tilde{Q}$
I

FIG. 13

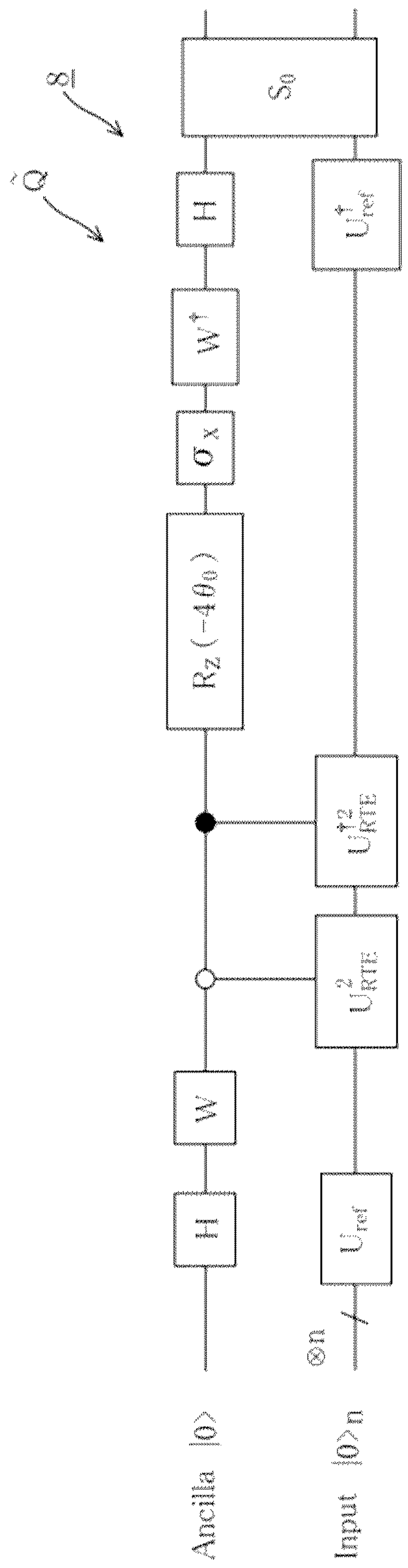
Ancilla |0>
Input |0>n
⊗n
H
W
$U_{ref}$
$U_{RTE}^{2}$
$U_{RTE}^{\dagger 2}$
$R_Z(-4\theta_0)$
$\sigma_x$
$W^\dagger$
H
$U_{ref}^\dagger$
$S_0$
$\tilde{Q}$
8

FIG. 14

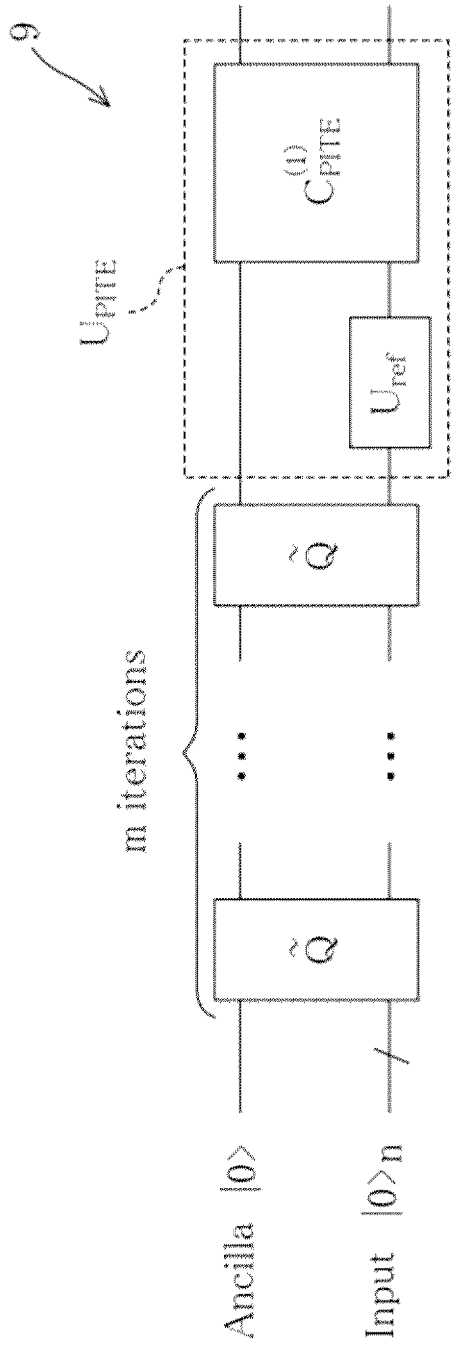
9
$U_{PITE}$
$C^{(t)}_{PITE}$
$U_{ref}$
$\tilde{Q}$
m iterations
$\tilde{Q}$
Ancilla $|0\rangle$
Input $|0\rangle n$

FIG. 15

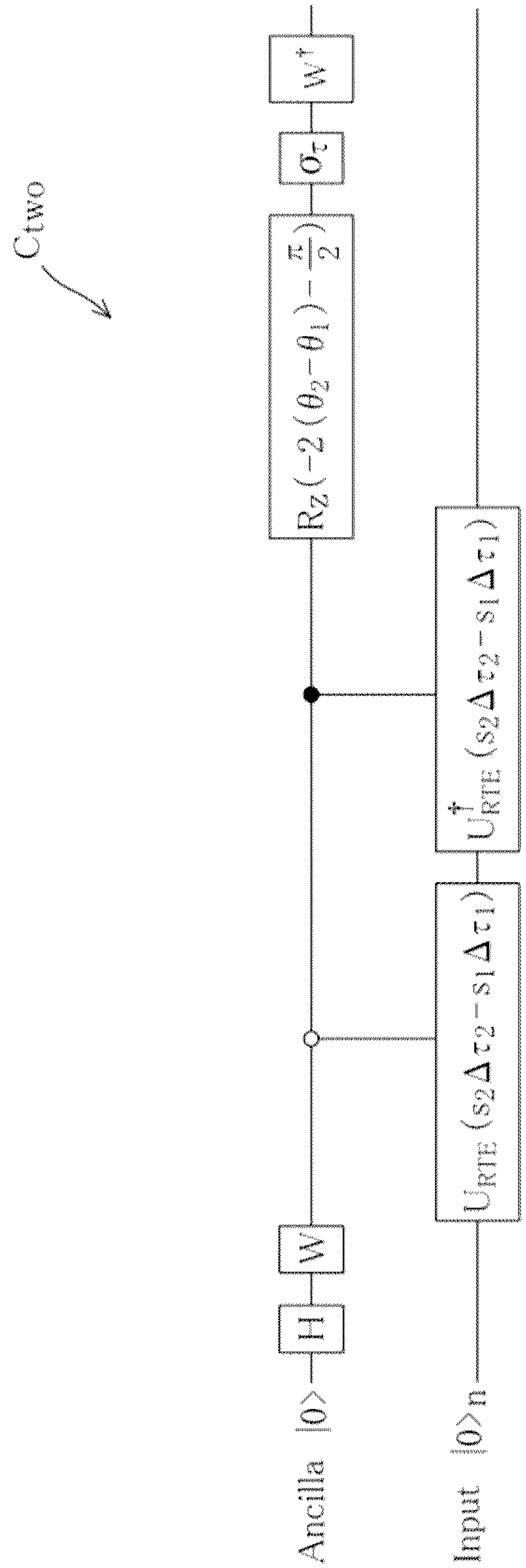
Ctwo
Ancilla |0〉
Input |0〉n
H
W
$U_{RTE}(s_2\Delta\tau_2 - s_1\Delta\tau_1)$
$U^{\dagger}_{RTE}(s_2\Delta\tau_2 - s_1\Delta\tau_1)$
$R_Z(-2(\theta_2-\theta_1)-\frac{\pi}{2})$
$\sigma_z$
$W^{\dagger}$

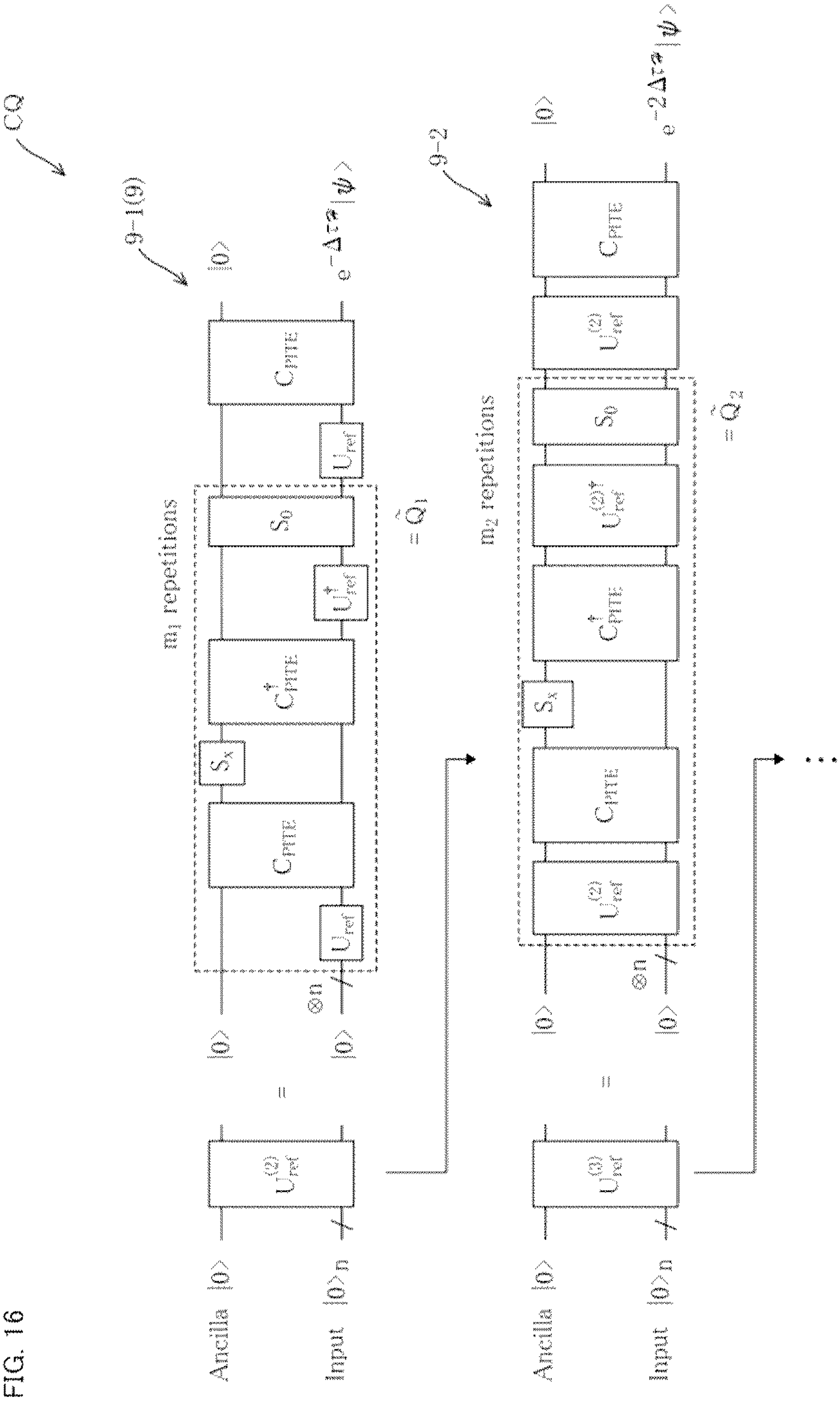
CQ
9−1(9)
9−2
Ancilla |0⟩
Input |0⟩n
m1 repetitions
m2 repetitions
⊗n
Sx
S0
Cpite
Uref
$e^{-\Delta\tau\mathcal{H}}|\psi\rangle$
$e^{-2\Delta\tau\mathcal{H}}|\psi\rangle$
$=\tilde{Q}_1$
$=\tilde{Q}_2$

FIG. 16

FIG. 17

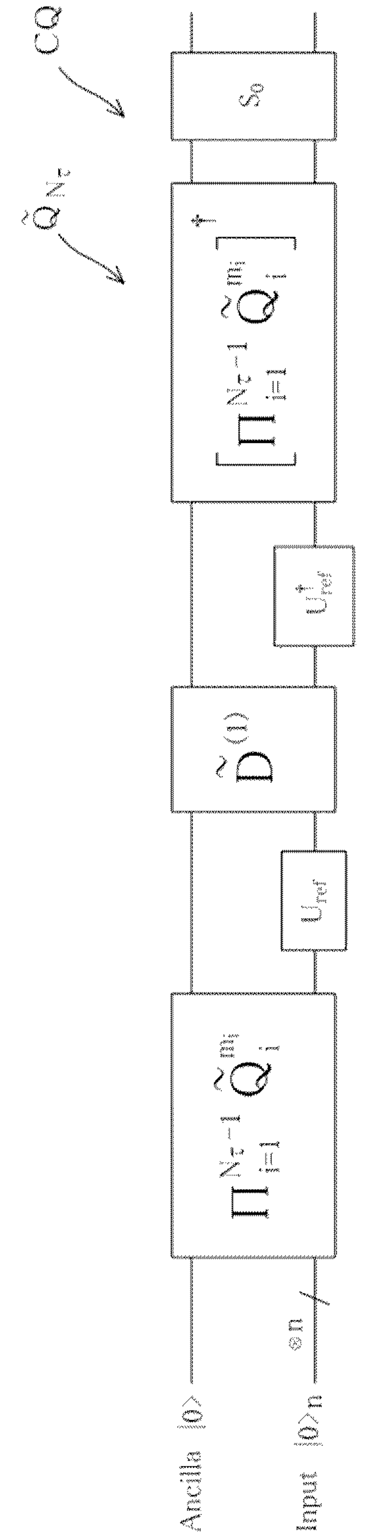

FIG. 18

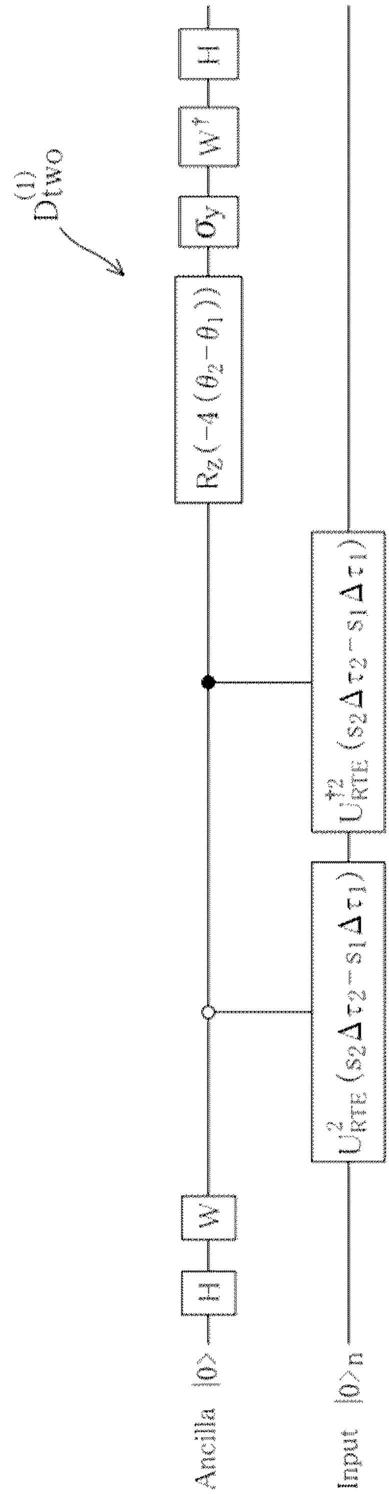
Ancilla |0>
Input |0>n
H
W
$U^{2}_{RTE}(s_2\Delta\tau_2 - s_1\Delta\tau_1)$
$U^{\dagger 2}_{RTE}(s_2\Delta\tau_2 - s_1\Delta\tau_1)$
$R_Z(-4(\theta_2-\theta_1))$
$D^{(1)}_{two}$
$\sigma_y$
$W^{\dagger}$
H

FIG. 19

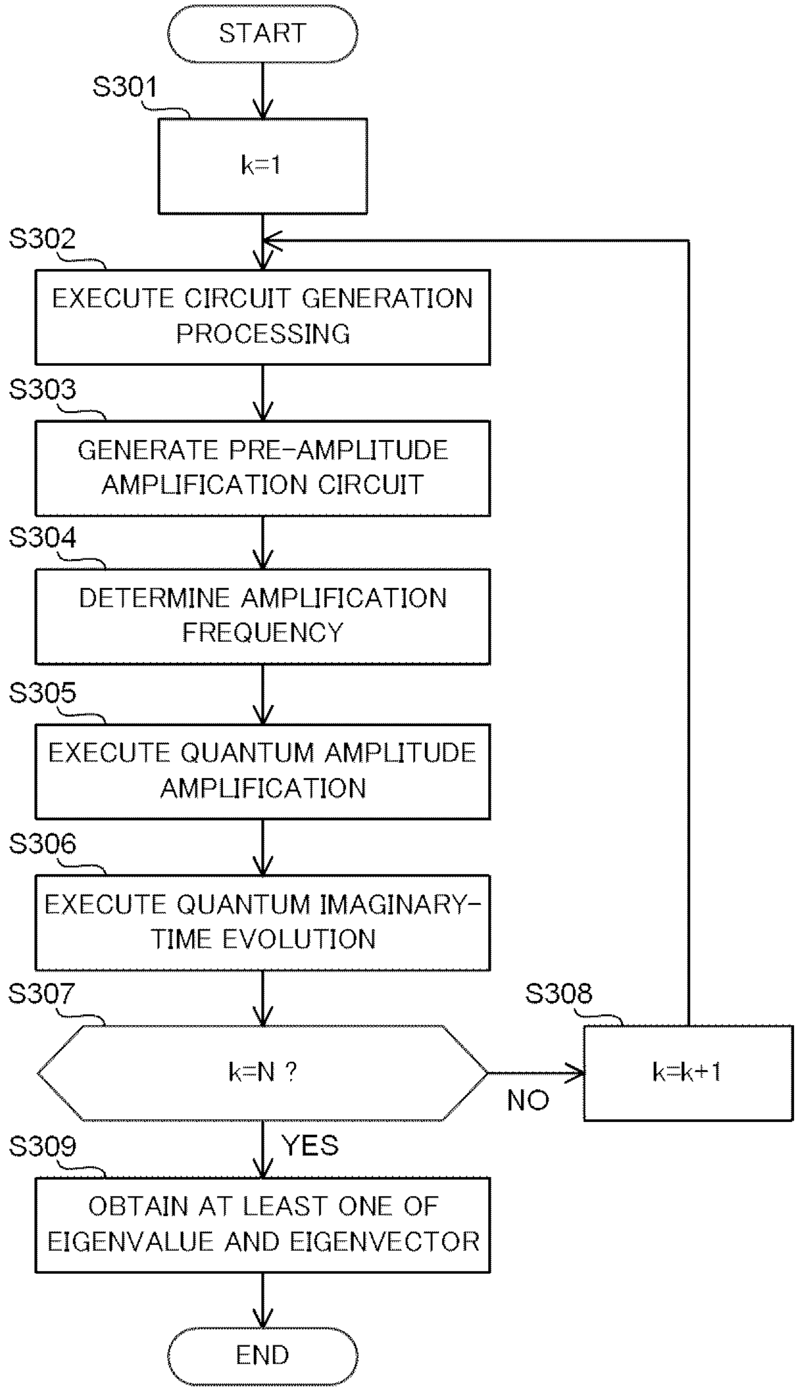
START
S301
k=1
S302
EXECUTE CIRCUIT GENERATION PROCESSING
S303
GENERATE PRE-AMPLITUDE AMPLIFICATION CIRCUIT
S304
DETERMINE AMPLIFICATION FREQUENCY
S305
EXECUTE QUANTUM AMPLITUDE AMPLIFICATION
S306
EXECUTE QUANTUM IMAGINARY-TIME EVOLUTION
S307
k=N ?
NO
S308
k=k+1
YES
S309
OBTAIN AT LEAST ONE OF EIGENVALUE AND EIGENVECTOR
END

FIG. 20

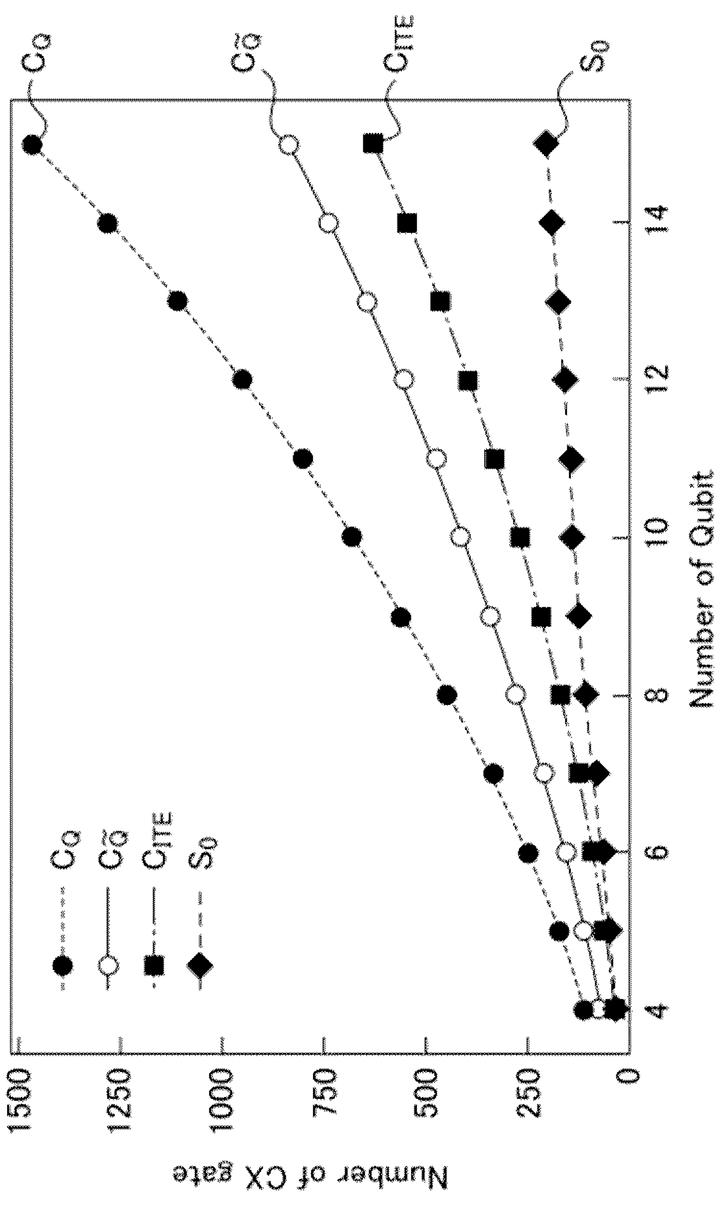

C_Q
C_Q̃
C_ITE
S_0
Number of CX gate
1500
1250
1000
750
500
250
0
4
6
8
10
12
14
Number of Qubit

FIG. 21

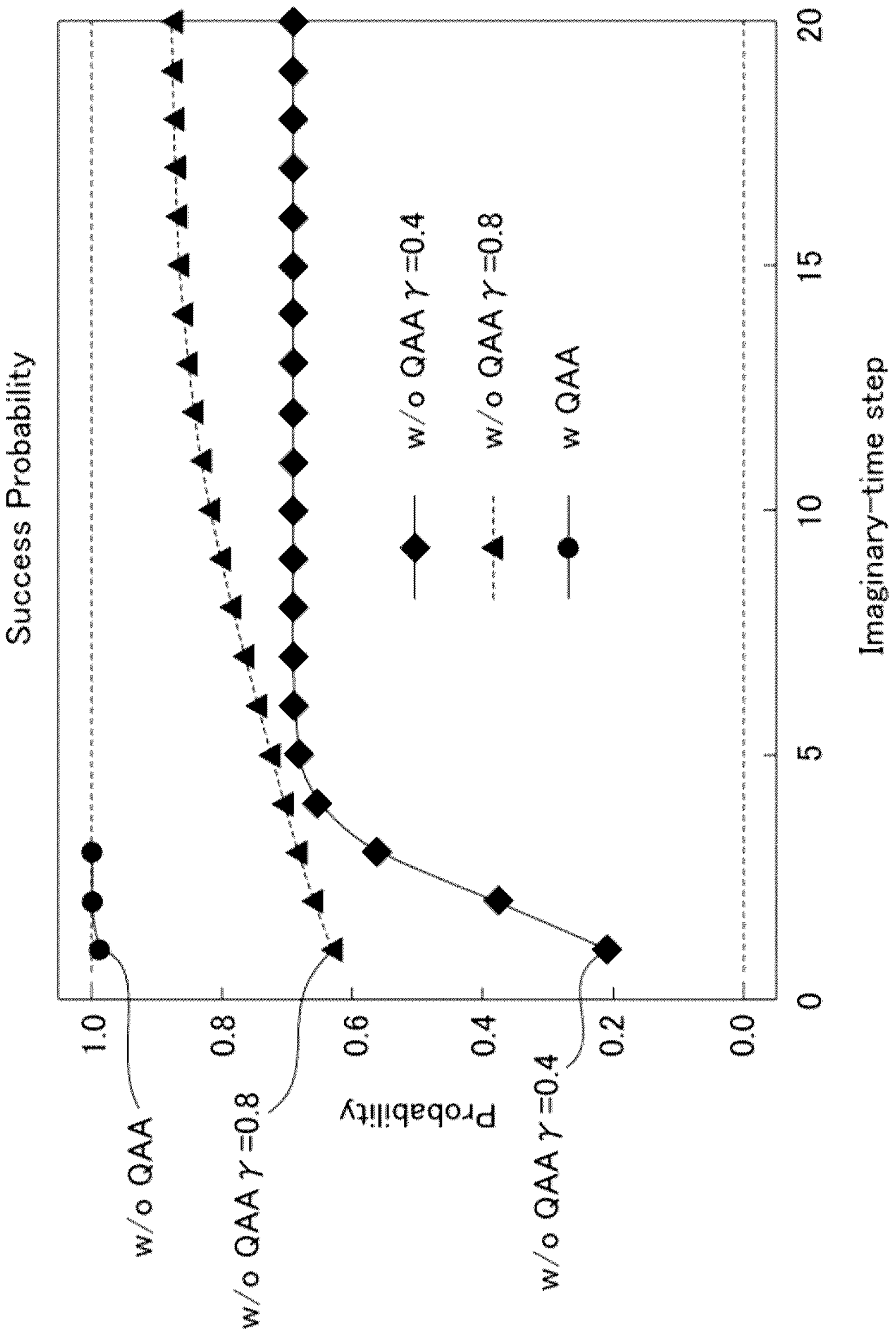
Success Probability
Probability
Imaginary-time step
0.0
0.2
0.4
0.6
0.8
1.0
0
5
10
15
20
w/o QAA γ =0.4
w/o QAA γ =0.8
w QAA
w/o QAA
w/o QAA γ =0.8
w/o QAA γ =0.4

FIG. 22

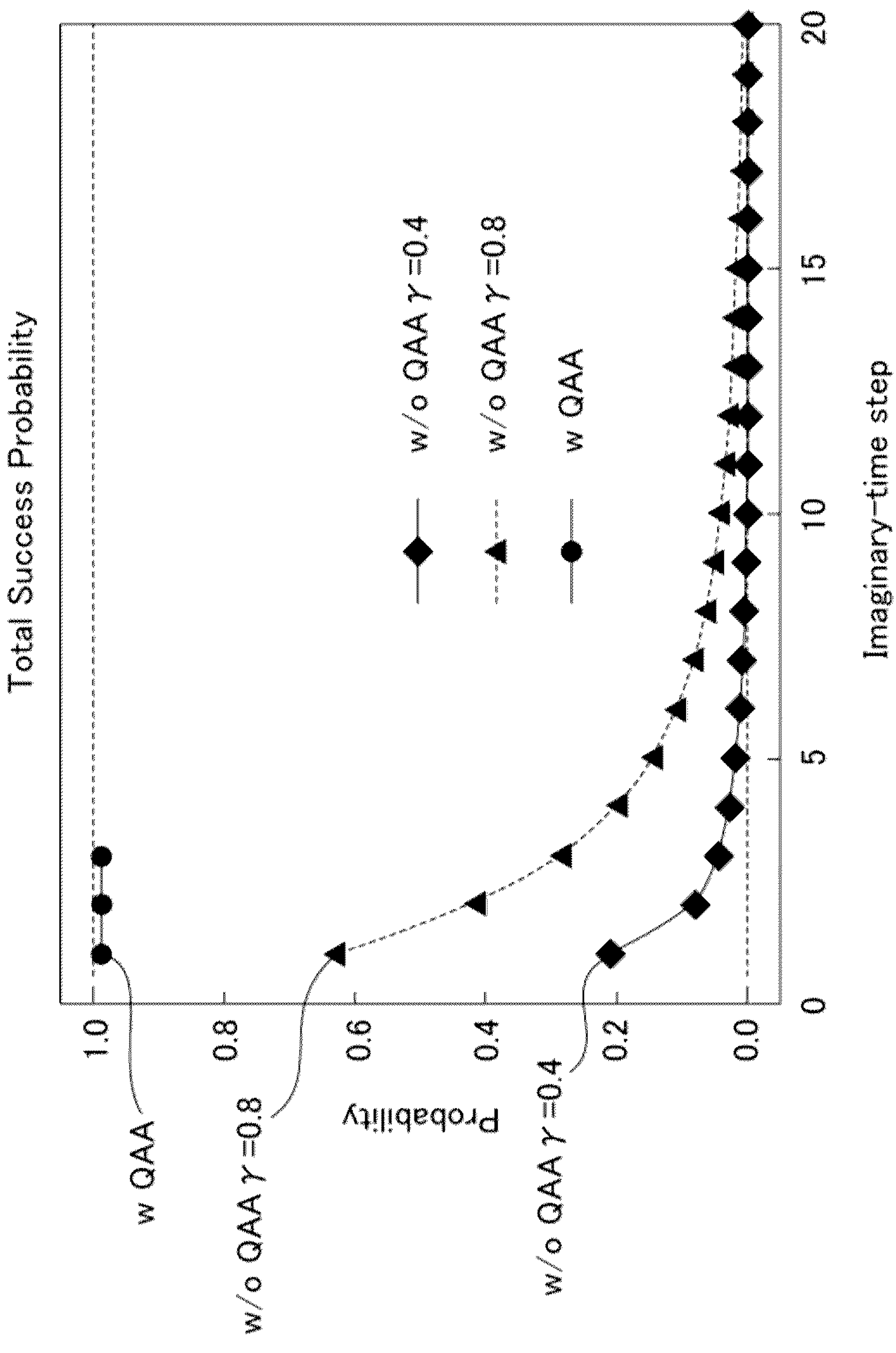
Total Success Probability
w/o QAA γ=0.4
w/o QAA γ=0.8
w QAA
Probability
1.0
0.8
0.6
0.4
0.2
0.0
0
5
10
15
20
Imaginary-time step
w QAA
w/o QAA γ=0.8
w/o QAA γ=0.4

FIG. 23

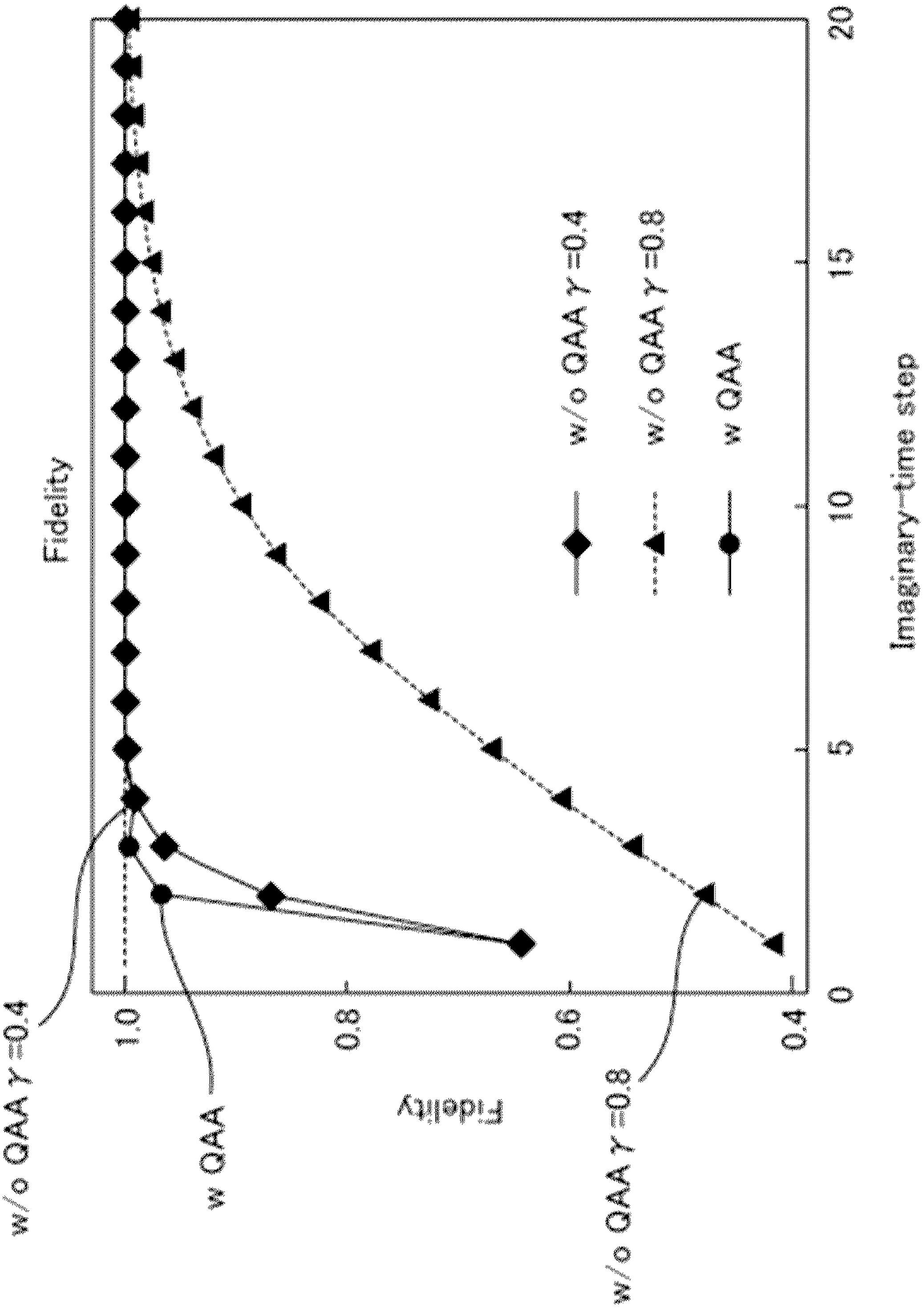
Fidelity
w/o QAA γ =0.4
w/o QAA γ =0.8
w QAA
Fidelity
1.0
0.8
0.6
0.4
0
5
10
15
20
Imaginary-time step
w/o QAA γ =0.4
w QAA
w/o QAA γ =0.8

FIG. 24

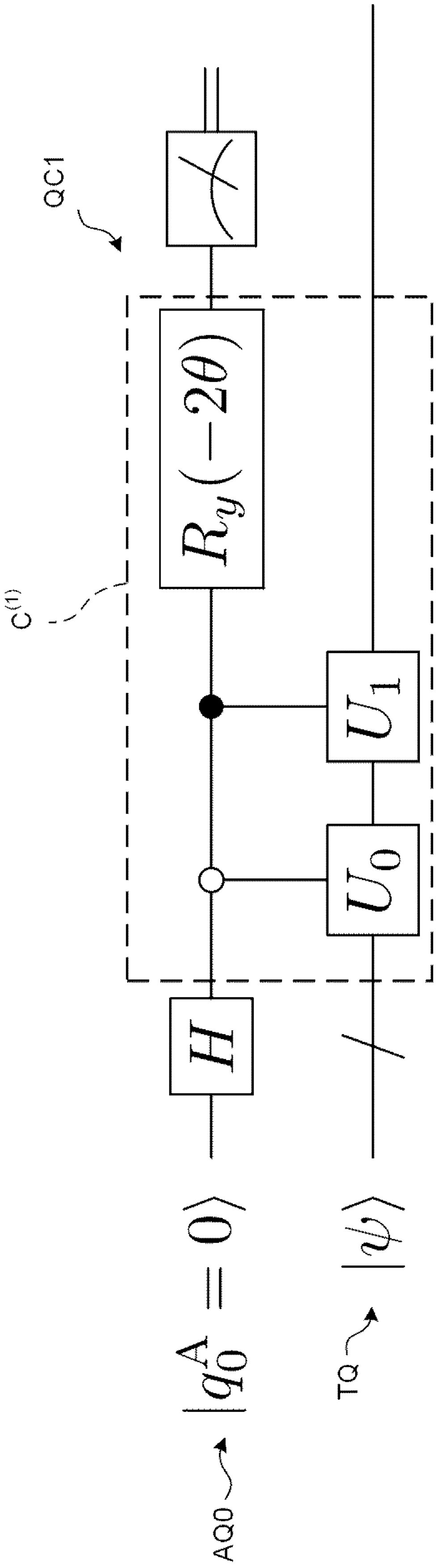

FIG. 25

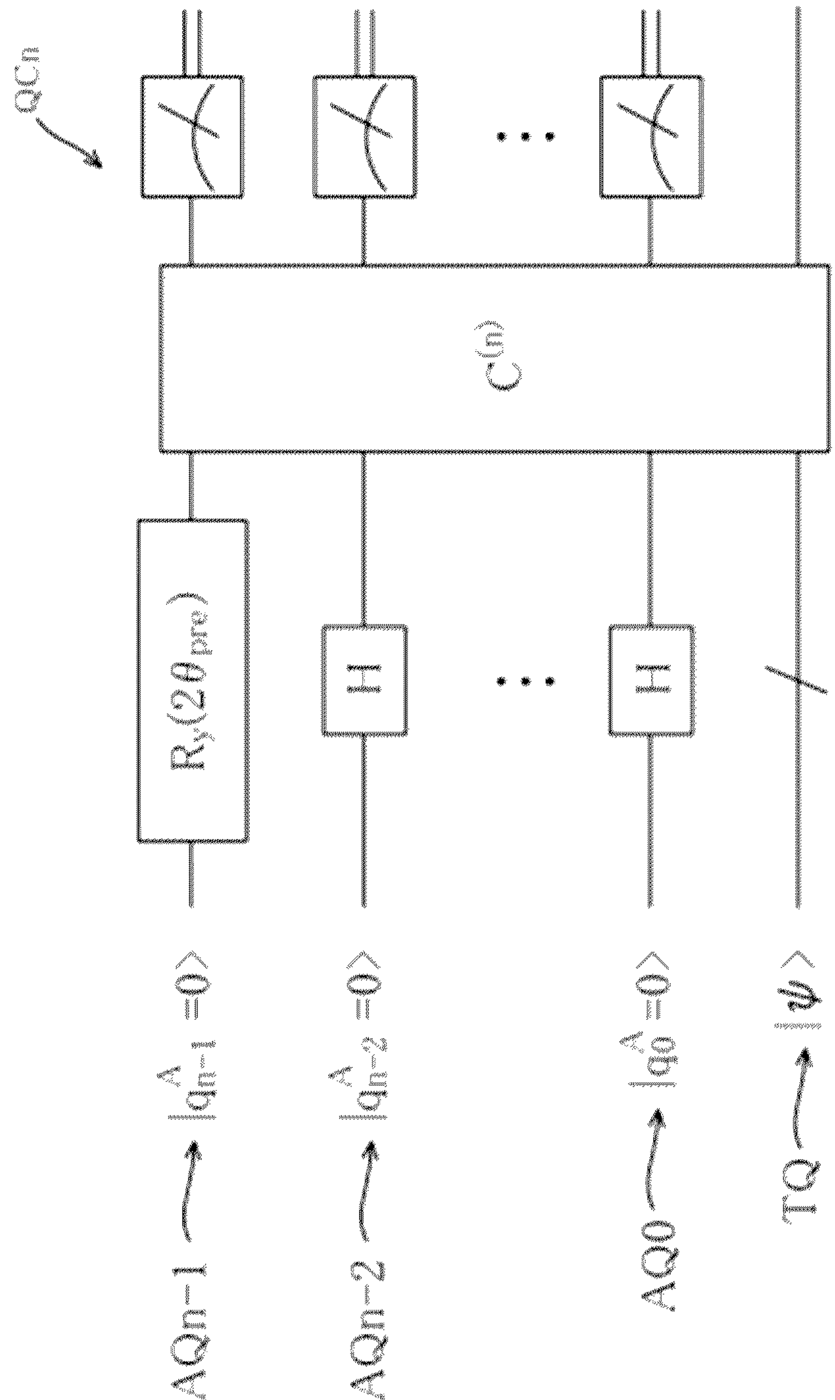
QCn
$C^{(n)}$
$R_y(2\theta_{pre})$
H
H
AQn-1
$|q^A_{n-1}=0\rangle$
AQn-2
$|q^A_{n-2}=0\rangle$
AQ0
$|q^A_0=0\rangle$
TQ
$|\psi\rangle$

FIG. 26

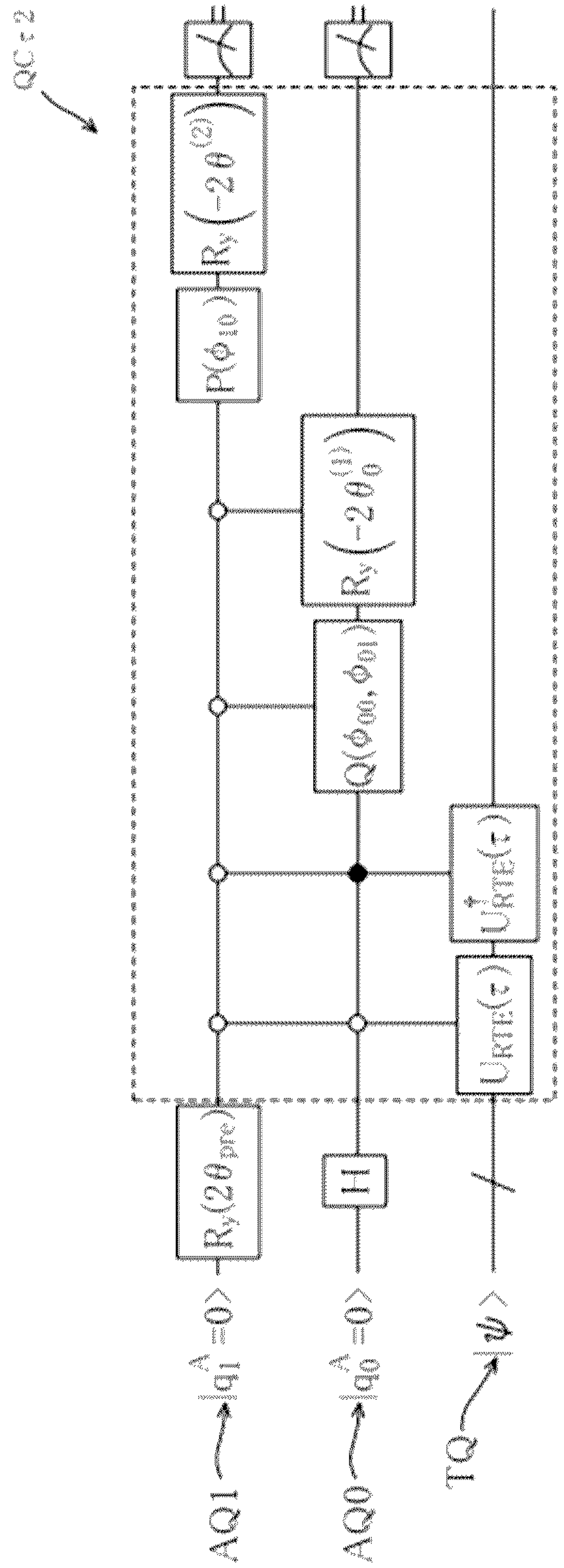

FIG. 27

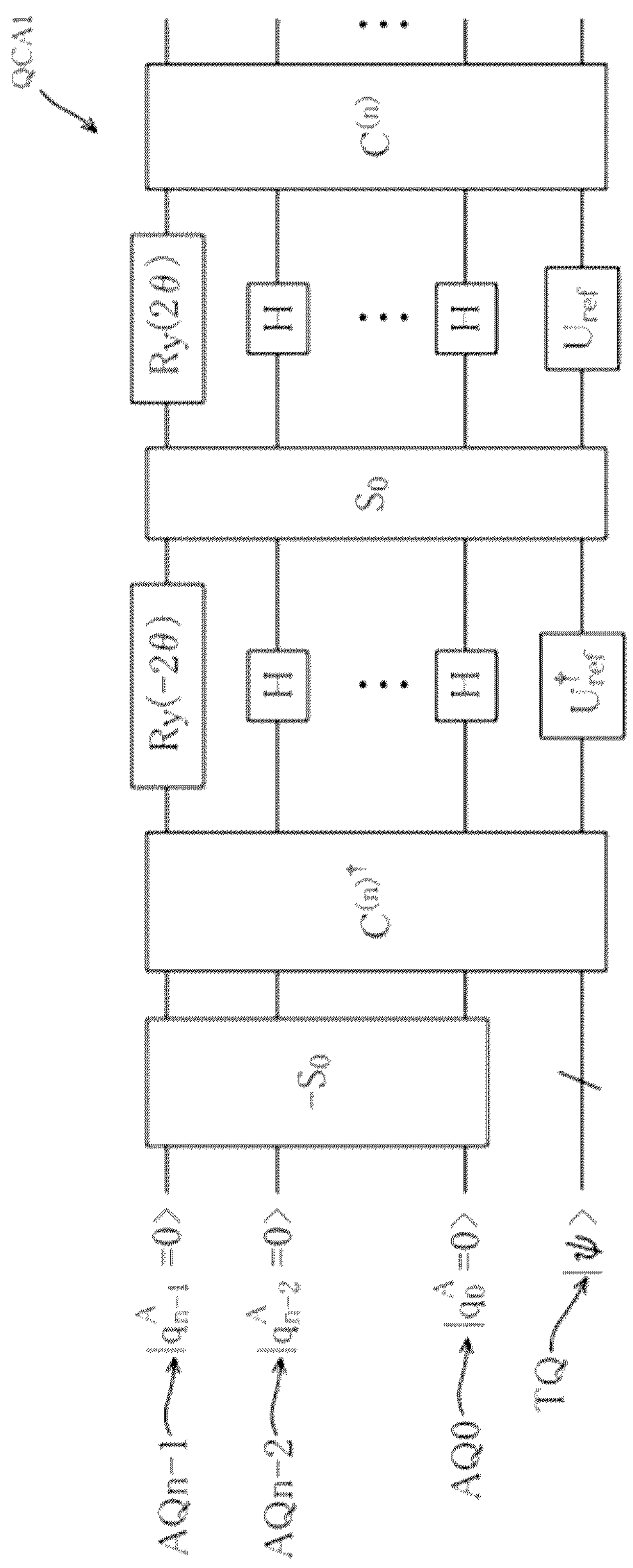
QCA1
C(n)
Ry(2θ)
H
U_ref
S0
Ry(-2θ)
U†_ref
C(n)†
-S0
AQn-1
|q̂n-1=0⟩
AQn-2
|q̂n-2=0⟩
AQ0
|q̂0=0⟩
TQ
|ψ⟩

FIG. 28

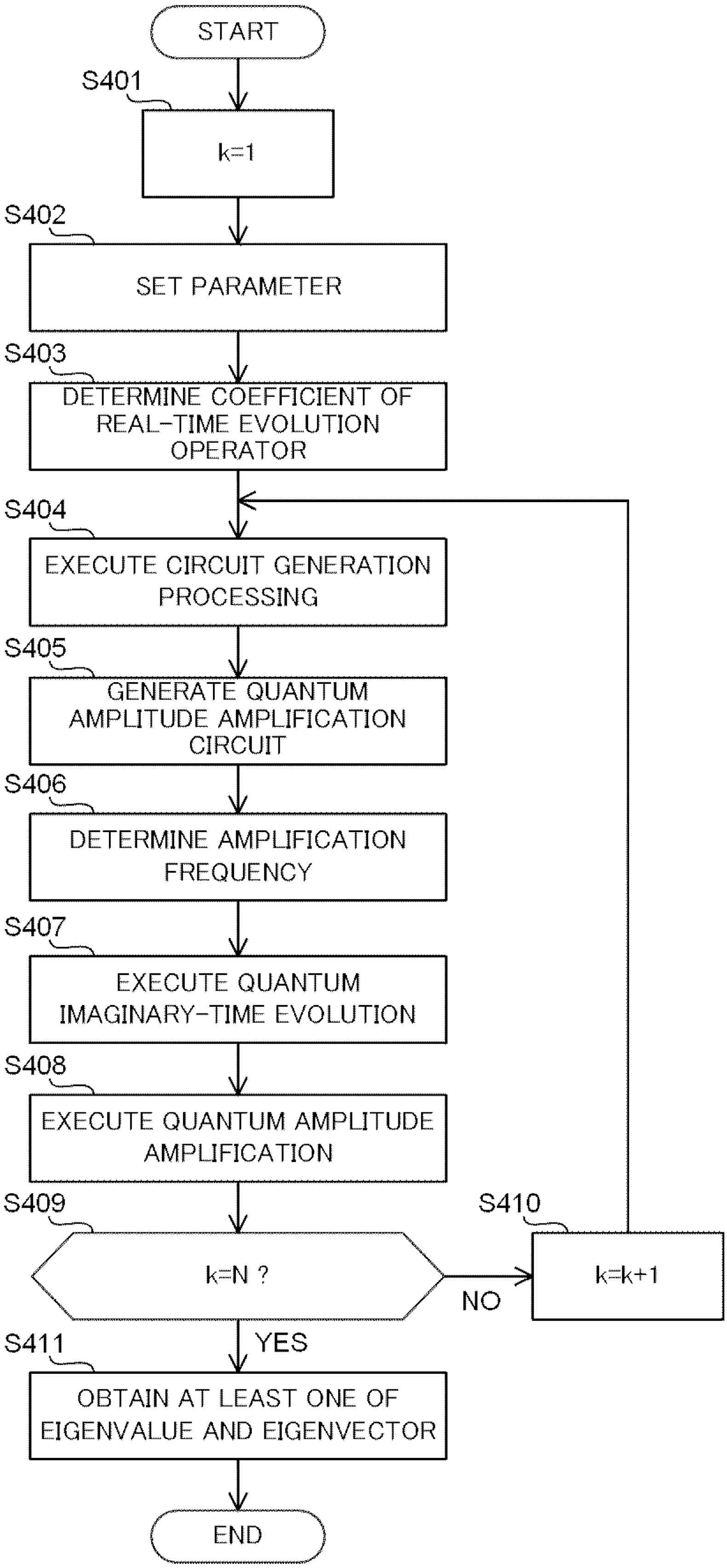
START
S401
k=1
S402
SET PARAMETER
S403
DETERMINE COEFFICIENT OF REAL-TIME EVOLUTION OPERATOR
S404
EXECUTE CIRCUIT GENERATION PROCESSING
S405
GENERATE QUANTUM AMPLITUDE AMPLIFICATION CIRCUIT
S406
DETERMINE AMPLIFICATION FREQUENCY
S407
EXECUTE QUANTUM IMAGINARY-TIME EVOLUTION
S408
EXECUTE QUANTUM AMPLITUDE AMPLIFICATION
S409
k=N ?
NO
S410
k=k+1
YES
S411
OBTAIN AT LEAST ONE OF EIGENVALUE AND EIGENVECTOR
END

FIG. 29

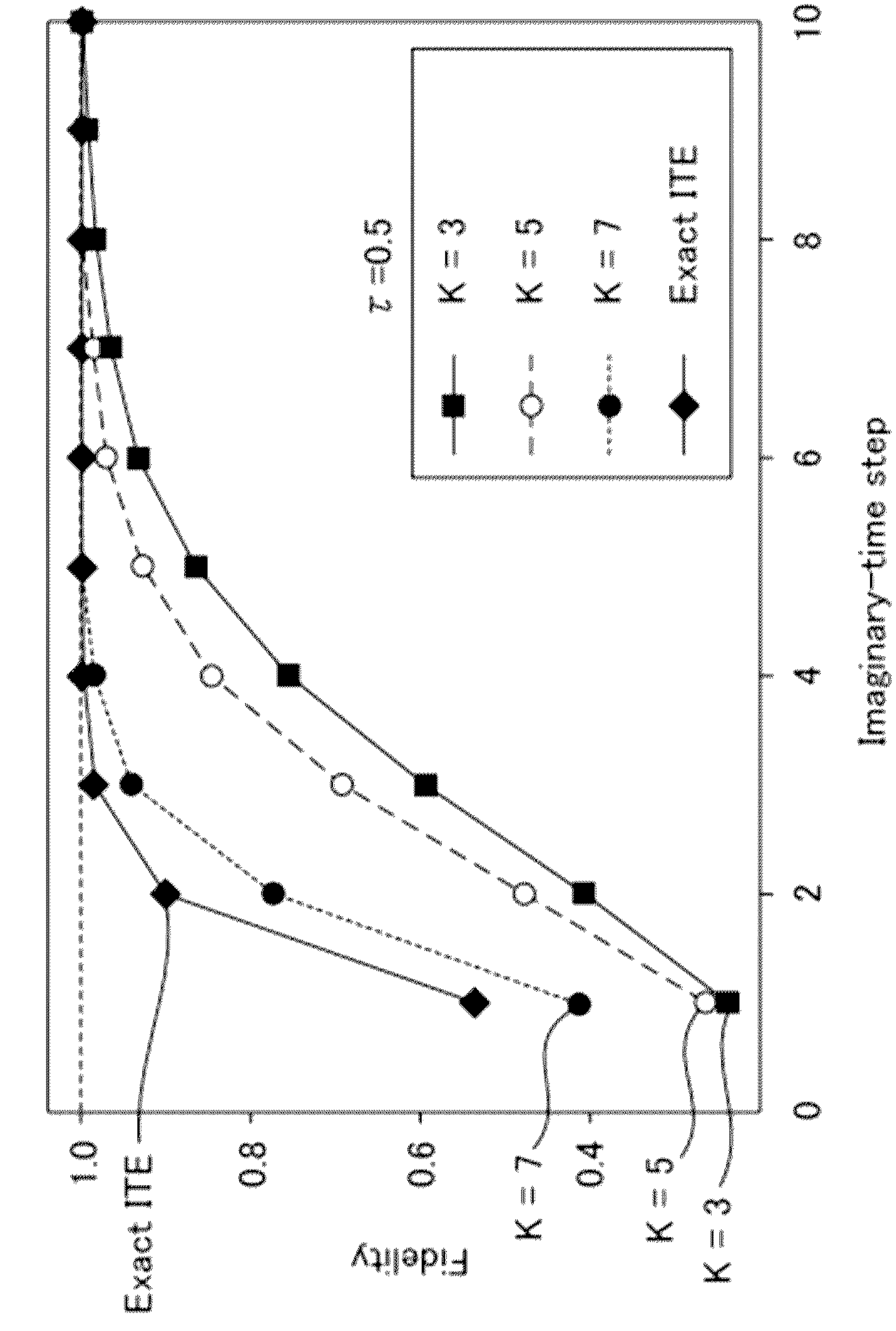
Fidelity
1.0
0.8
0.6
0.4
0
2
4
6
8
10
Imaginary−time step
τ =0.5
K = 3
K = 5
K = 7
Exact ITE
Exact ITE
K = 7
K = 5
K = 3

**INTERNATIONAL SEARCH REPORT**

International application No.
**PCT/JP2022/034322**

**A. CLASSIFICATION OF SUBJECT MATTER**

***G06N 10/00***(2022.01)i; ***G06F 7/38***(2006.01)i
FI: G06N10/00; G06F7/38 510

According to International Patent Classification (IPC) or to both national classification and IPC

**B. FIELDS SEARCHED**

Minimum documentation searched (classification system followed by classification symbols)

G06N10/00; G06F7/38

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | NISHI, Hirofumi et al. Implementation of quantum imaginary-time evolution method on NISQ devices: Nonlocal approximation. arXiv.org [online]. 26 May 2020, [retrieved on 25 November 2022], Internet: <URL:https://arxiv.org/pdf/2005.12715v1.pdf> entire text, all drawings | 1-20 |
| A | LIU, Tong et al. Probabilistic Nonunitary Gate in Imaginary Time Evolution. arXiv.org [online]. 02 September 2020, [retrieved on 25 November 2022], Internet: <URL:https://arxiv.org/pdf/2006.09726v2.pdf> entire text, all drawings | 1-20 |
| A | WO 2021/177031 A1 (TOKYO INST. OF TECHNOLOGY) 10 September 2021 (2021-09-10) entire text, all drawings | 1-20 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 November 2022** | **06 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/034322**

| Patent document cited in search report | Publication date (day/month/year) | Patent family member(s) | Publication date (day/month/year) |
|---|---|---|---|
| WO 2021/177031 A1 | 10 September 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2015135377 A